# EUROPÄISCHE PATENTSCHRIFT

(11) **EP 3 308 047 B1**
(45) Veröffentlichungstag und Bekanntmachung des Hinweises auf die Patenterteilung: **20.01.2021**
(21) Anmeldenummer: 16728956.0
(22) Anmeldetag: 14.06.2016
(51) Int. Cl.: F16D 55/226, F16D 65/097, F16D 65/18

(54) **SCHEIBENBREMSE FÜR EIN NUTZFAHRZEUG UND BREMSBELAGSATZ**
DISK BRAKE FOR A UTILITY VEHICLE AND BRAKE PAD SET
FREIN À DISQUE POUR VÉHICULE UTILITAIRE ET JEU DE GARNITURES DE FREIN

(30) Priorität: 15.06.2015 DE 102015109540; 09.10.2015 DE 102015117285; 17.03.2016 DE 102016104970
(43) Veröffentlichungstag der Anmeldung: 18.04.2018
(60) Teilanmeldung: 18178629.4
(73) Patentinhaber: KNORR-BREMSE Systeme für Nutzfahrzeuge GmbH, 80809 München (DE)
(72) Erfinder: FRICKE, Jens, 94474 Vilshofen (DE); RGUICHI, Abdelaziz, 82140 Olching (DE); EICHLER, Thomas, 80803 München (DE); KRAUSE, Oliver, 82515 Wolfratshausen (DE); KLINGNER, Matthias, 82272 Moorenweis (DE); PESCHEL, Michael, 82296 Schöngeising (DE); SCHÖFBERGER, Tobias, 84048 Mainburg (DE); ADAMCZYK, Philipp, 87677 Stöttwang (DE); SCHÖNAUER, Manfred, 80995 München (DE); PLEINTINGER, Martin, 94428 Eichendorf (DE); MOLNAR, Markus, 94081 Fürstenzell (DE); GASSLBAUER, Franz, 84381 Johanniskirchen (DE); TROPP, Martin, 84364 Bad Birnbach (DE)
(86) Internationale Anmeldenummer: PCT/EP2016/063594
(87) Internationale Veröffentlichungsnummer: WO 2016/202778

(56) Entgegenhaltungen:
- WO-A1-96/08663
- DE-A1-102009 009 567
- JP-A- S57 179 435
- US-A- 4 491 204
- US-A- 5 310 024
- US-A1- 2008 060 888

## Beschreibung

Die Erfindung betrifft eine Scheibenbremse für ein Nutzfahrzeug nach dem Oberbegriff des Anspruchs 1.

Bei einer gattungsgemäßen, auch als Schiebesattel-Bremse bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern.

Um diesem Problem zu begegnen, ist in der DE 10 2007 001 213 eine Scheibenbremse offenbart mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Prinzipiell hat sich diese Konstruktion bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Die DE 43 01 621 A1 beschreibt eine Schwimmsattel-Scheibenbremse mit einem ortsfesten Bremsträger, der zwei über den äußeren Rand einer Bremsscheibe ragende Trägerarme aufweist, mit beiderseits der Bremsscheibe angeordneten, je einen Reibbelag und eine Rückenplatte aufweisenden Bremsbacken, die an den Trägerarmen verschiebbar abgestützt sind, mit einem am Bremsträger axial verschiebbar geführten Schwimmsattel, der die Bremsbacken umgreift und einen zum Andruck der Bremsbacken an die Bremsscheibe bestimmte Betätigungsvorrichtung aufweist, mit einer auf die Bremsbacken axial in Bremslöserichtung einwirkenden Federanordnung, die nach dem Bremsen das Einstellen eines Lüftspiels zwischen Bremsbacken und Bremsscheibe unterstützt. Die Federanordnung weist zumindest eine Spreizfeder auf, die an einem Trägerarm des Bremsträgers in axialer Richtung insgesamt unverschiebbar befestigt ist, dass die Befestigung an einem über dem äußeren Rand der Bremsscheibe befindlichen Abschnitt des Trägerarms erfolgt, und dass die Spreizfeder zumindest zwei Federarme aufweist, die an den Rückplatten der Bremsbacken in axialer Richtung federnd anliegen.

Die US2014/0339026 A1 beschreibt eine Spreizfeder, umfassend einen Verriegelungsarm, der die Spreizfeder mit einem Bremskomponente verbindet, einen Rückzugarm; und eine Vorspanneinrichtung, die zwischen dem Verriegelungsarm und dem Rückholarm angeordnet ist, wobei die Vorspannvorrichtung sechs spiralförmige Schleifen oder mehr umfasst, die Energie während einer Bremsenaktivierung speichern und sobald der Bremsvorgang abgeschlossen ist, die Bremskomponenten (Bremsbelag) zurückziehen. Es wird ein Bremssattel in Form eines Faustsattels, welcher kein Schiebesattel ist, angegeben. Dieser ist für ein Personenfahrzeug geeignet, jedoch nicht für ein Nutzfahrzeug.

Eine gattungsgemäße Scheibenbremse ist aus der US 4 491 204 A1 und der WO 96/08663 A1 bekannt.

Der Erfindung liegt die Aufgabe zugrunde, eine Scheibenbremse der gattungsgemäßen Art so weiterzuentwickeln, dass mit konstruktiv einfachsten Mitteln die Standzeit insbesondere der Bremsbeläge und der Bremsscheibe erhöht und die Betriebskosten insgesamt gesenkt werden.

Diese Aufgabe wird durch eine Scheibenbremse mit den Merkmalen des Anspruchs 1 gelöst.

Durch die erfindungsgemäße Ausgestaltung der Scheibenbremse wird eine synchrone Rückstellung beider Bremsbeläge sowie einer Rückstellung des Bremssattels bei gelöster Bremse erreicht, wobei die Synchronität sowohl die Rückstellkräfte wie auch die Rückstellwege betrifft. Dabei wirkt die Rückstellkraft entgegen der jeweiligen Zuspannrichtung der beiden Bremsbeläge, also beim reaktionsseitigen Bremsbelag zum Sattelrücken hin und beim aktionsseitigen Bremsbelag zum Sattelkopf hin, unter Spaltbildungen gegenüber der Bremsscheibe.

Der Angriff der Spreizeinrichtung an den beiden Bremsbelägen erfolgt zweckmäßigerweise an den Belagträgerplatten und zwar auf der dem daran befestigten Reibbelag zugewandten Seite oder an der gegenüberliegenden Rückenseite. Um ein Verkanten des jeweiligen Bremsbelages bei der Rückstellung zu vermeiden, greift das Spreizelement entweder zentral, an einem oberen frei liegenden Randbereich der Belagträgerplatte an oder symmetrisch an zwei Anlagebereichen rechts und links.

Ein Bremsbelagsatz für die erfindungsgemäße Scheibenbremse weist mindestens zwei Bremsbeläge mit jeweils einer Belagträgerplatte und einem auf der Belagträgerplatte angebrachten Reibbelag und die oben angegebene Spreizeinrichtung auf. Die Belagträgerplatte weisen außerhalb der Reibbeläge einseitig im Mittenbereich oder an mindestens zwei zur Mitte abständig zueinander angeordneten Anlagebereichen jeweils eine Anlagefläche und eine Auflagefläche auf. Damit ergibt sich der Vorteil, mehrere Funktionen (axiale und radiale Federkraftübertragung, Federendeführung) auf engem Raum zu realisieren.

In einer Ausführung erstrecken sich die Spreizelemente ausgehend von einem zentralen Bereich in der Mitte der Öffnung von innen nach außen zu den zur Mitte abständig zueinander angeordneten Anlagebereichen. Es ist auch möglich, dass sich die Spreizelemente ausgehend von einem zentralen Bereich in der Mitte der Öffnung von innen nach außen zu den gleichmäßig zur Mitte abständig zueinander angeordneten Anlagebereichen erstrecken.

Auf diese Weise ist die Spreizeinrichtung mittig im Bremssattel angeordnet, wobei sie ebenfalls innerhalb einer Hüllkurve einer Felge eines zugeordneten Rades angeordnet ist.

Die beiden Spreizelemente sind mittig (in Bezug auf die Trägerhörner) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslauf- und Einlaufseite, die zu Schrägverschleiß führen können, können durch das einseitige Angreifen je einer Feder pro Belag minimiert werden.

Eine weitere Ausführung sieht vor, dass der sich der zentrale Bereich der Öffnung beiderseits einer virtuellen Mitte der Öffnung in etwa parallel zu der Ebene der Bremsscheibe in einer Länge in einem Bereich von 30 bis 50 % einer Längsachse der Öffnung erstreckt. Damit ergibt sich eine vorteilhafte Anpassung der Federkräfte.

Es weist die Spreizeinrichtung die Federarme auf, von denen nach einer Ausgestaltung jeweils zwei an einer zugeordneten Belagträgerplatte anliegen, wobei die Federarme in dem zentralen Bereich der Öffnung miteinander verbunden sind, was einen Einbau bei Montage und Wartung vereinfacht.

Nach einem weiteren Gedanken der Erfindung weist die Spreizeinrichtung gegensinnig wirkende Spreizelemente auf, vorzugsweise elastisch wirkend, insbesondere in Form von Federelementen.

In einfachster Form ist eine Druckfeder zwischen den beiden Bremsbeläge angeordnet, als Schrauben- oder Schenkelfeder, wobei die Schenkelfeder mittig oberhalb der Bremsscheibe gelagert ist, beispielsweise an einem Belaghaltebügel, mit dem die beiden Bremsbeläge unter Vorspannung in einen Belagschacht drückbar sind. Prinzipiell reicht bei einem Einsatz einer Schraubenfeder deren endseitige Anbindung an den Belagträgerplatten aus, um die Spreizfunktion in ausreichendem Maße zu erfüllen.

Es steht die Spreizeinrichtung statt mit dem Belaghaltebügel mit dem Bremsträger in Wirkverbindung, der ein Widerlager bildet und in dem die Bremsbeläge achsgleich zur Bremsscheibe verschiebbar gelagert sind.

Hierzu ist erfindungsgemäß ein Haltebogen vorgesehen, der die Bremsscheibe im Umfangsbereich, bis zu beidseitig einen Belagschacht begrenzenden Bremsträgerhörnern des Bremsträgers überspannt und, bezogen auf die Dicke der Bremsscheibe, mittig dazu angeordnet ist. Der Haltebogen ist nicht der Belaghaltebügel, sondern ein zusätzliches Bauteil, das nicht an dem Belaghaltebügel angebracht ist.

Der Haltebogen kann in einer Ausführung an zwei sich gegenüberliegenden, mit dem Bremsträger verbundenen Bügeln angeschlossen sein, was eine einfache Anbindung ermöglicht.

Erfindungsgemäß ist der Haltebogen an mindestens die zwei Bremsträgerhörnern eines Belagschachtes angeschlossen, während die an beiden Bremsbelägen angreifenden Spreizelemente mit dem Haltebogen verbunden sind. Dieser bildet somit eine Zentriereinrichtung, die in Korrespondenz mit dem Bremsträger als Fixlager konstruktiv auch anders verwirklicht werden kann.

Erfindungsgemäß ist der Haltebogen in seiner Kontur C-förmig ausgebildet, mit einem die Bremsscheibe im erwähnten Maß überspannenden Mittelschenkel und zwei dazu gleichgerichtet zu den Bremsträgerhörnern hin abgewinkelten Endschenkeln, von denen jeweils einer an einem Bremsträgerhorn des entsprechenden Belagschachtes befestigt ist.

Mittels des Haltebogens, an dem die Spreizeinrichtung mit ihren Federarmen befestigt ist, erfolgt eine automatische Zentrierung des Bremssattels nach einem Lösen der Bremse, also nach Beenden eines Bremsvorgangs, wobei durch die insoweit fixierte Positionierung der Spreizeinrichtung die Bremsbeläge derart zurückgestellt werden, dass sich der Bremssattel gegenüber der Bremsscheibe zentriert.

Im Übrigen ist die Spreizeinrichtung so ausgelegt, dass sie über das komplette Verschleißmaß der Bremsbeläge wirksam ist.

Da sich mit zunehmendem Verschleiß die Kraftangriffspunkte an den Bremsbelägen verändern, sind die die Bremsbeläge kontaktierenden Funktionsteile der Spreizeinrichtung so ausgebildet, dass sie sich gleitend an der Belagträgerplatte der jeweiligen Bremsbeläge abstützen.

Um eine sichere Halterung der Federschenkel bzw. bei einer anderen konstruktiven Variante der Federarme auch bei Rüttelbelastung im Fahrbetrieb zu gewährleisten, stützen sich die Federarme an der, bezogen auf den Grund des Belagschachtes, oberen Kante der Belagträgerplatte ab, ebenfalls, wie vorbeschrieben gleitend.

Bei entsprechender Auslegung der Spreizeinrichtung kann überdies auf den Einsatz von Belaghaltefedern verzichtet werden, die, wie aus dem Stand der Technik bekannt, am oberen Rand der Belagträgerplatten befestigt sind und an denen sich ein Belaghaltebügel abstützt, so dass der jeweilige Bremsbelag unter Vorspannung im Belagschacht des Bremsträgers gehalten ist.

Die bauliche Realisierung der erfindungsgemäßen Spreizeinrichtung kann konstruktiv unterschiedlich sein, wobei sich ein wesentlicher Vorteil daraus ergibt, dass auf bewegliche Bauteile im Wesentlichen verzichtet werden kann, mit Ausnahme natürlich der federnden Spreizelemente, die zur Funktion eine federnde Auslenkung vollführen.

Der nun mögliche Verzicht auf bewegliche Teile wirkt sich naturgemäß standzeiterhöhend auf die Spreizeinrichtung aus, ebenso wie die geringe Anzahl notwendiger Bauteile, wodurch sich überdies eine äußerst kostengünstige Herstellung und Montage ergibt.

In einer weiteren Ausführung ist jeder Federarm endseitig mit einem gabelförmigen Federende ausgebildet, unter Bildung eines Stützschenkels sowie eines Andruckschenkels, wobei der Stützschenkel auf einer Auflagefläche einer Schmalseite der Belagträgerplatte bewegbar aufliegt und der Andruckschenkel mit Druck an einer Anlagefläche der dem Reibbelag zugewandten Seite der Belagträgerplatte bewegbar anliegt. Auf diese Weise ist eine vorteilhafte gleichzeitige Funktionalität möglich, nämlich dass der Federarm nicht nur Druckkräfte über die Anlagefläche auf die Belagträgerplatte einleiten kann, sondern auch in seinen Bewegungen durch die Anlagefläche und die Auflagefläche verschiebbar geführt ist. Zudem ist es möglich, dass der Bremsbelag durch die Federkraft, welche über die Auflagefläche in ihn eingeleitet wird, in seinem Bremsbelagschacht federnd gehalten wird.

In einer Ausführung kann die Auflagefläche in einem Winkel zu einer Horizontalen angeordnet sein, wobei der Winkel in einem Bereich von 3 bis 15° liegt.

In einer anderen Ausführung kann die Anlagefläche von der Belagträgerplatte hervorstehen oder in die Belagträgerplatte eingeformt sein. Damit ist eine vorteilhafte Anpassung an unterschiedliche Bremsenausführungen möglich.

Zudem kann ein Vorsprung auf der Anlagefläche vorgesehen sein, wobei der Vorsprung von der Anlagefläche in einen Schlitz zwischen dem Stützschenkel und dem Andruckschenkel hervorsteht. Dies kann eine exakte Führung und verbesserte Kraftübertragung ermöglichen.

In einer alternativen Ausführung ist jeder Federarm endseitig mit einem Federende mit einem Andruckschenkel ausgebildet, wobei der Andruckschenkel mit einem Stützabschnitt der dem Reibbelag zugewandten Seite der Belagträgerplatte in Kontakt steht, wobei der Andruckschenkel mit einem Anlageabschnitt mit Druck an einer Anlagefläche des Stützabschnitts der Belagträgerplatte bewegbar anliegt und gleichzeitig mit einem Auflageabschnitt auf einer Auflagefläche des Stützabschnitts der Belagträgerplatte bewegbar aufliegt. Auf diese Weise ergibt sich der Vorteil, dass zwei Funktionen in dem Andruckschenkel realisiert werden können, nämlich Federkraftübertragung in axialer und in radialer Richtung auf den Bremsbelag bei gleichzeitiger Führung des Federendes und Bauraum und Materialeinsparung.

In alternativer Ausgestaltung können ein Andruckschenkel und ein rechtwinklig dazu liegender Stützschenkel in Form einer Winkellasche ausgebildet sein, was einen Bauraum verkleinern kann.

In einer Ausführung ist es bevorzugt, dass der Stützabschnitt mit der Anlagefläche und der Auflagefläche in die Belagträgerplatte eingeformt ist. Dies ist vorteilhaft, da sich eine Platz- und Materialeinsparung ergibt.

Die Auflagefläche der Anlagebereiche kann in einem Winkel zu einer Horizontalen angeordnet sein, wobei der Winkel in einem Bereich von 3 bis 15° liegt. Damit wird eine Führung des Federendes verbessert.

Wenn die Anlagefläche von der Belagträgerplatte hervorsteht oder in die Belagträgerplatte eingeformt ist, kann dadurch eine vorteilhafte Anpassung an unterschiedliche Einbausituationen möglich sein.

Es ist auch möglich, dass ein Vorsprung auf der Anlagefläche vorgesehen ist, wobei der Vorsprung von der Anlagefläche hervorsteht. Damit ist eine exaktere Führung des Federendes möglich.

Eine besonders vorteilhafte Ausführung kann dadurch ermöglicht werden, wenn die Anlagebereiche einen Stützabschnitt aufweisen, welcher mit der Anlagefläche und der Auflagefläche in die Belagträgerplatte eingeformt ist. Dies ergibt eine Platz- und Materialersparnis.

In einer besonders bevorzugten Ausführung ist es vorgesehen, dass die Anlagefläche zu der Seitenfläche der Belagträgerplatte, welche mit dem Reibbelag versehen ist, versetzt in Richtung von dem Reibbelag weg weisend verläuft. Damit ergibt sich eine vorteilhafte Führung des Federendes in der Belagträgerplatte zusammen mit einer Federkraftübertragung auf geringem Einbauraum.
- Die Spreizeinrichtung umfasst zwei Spreizelemente, wobei ein erstes Spreizelement auf einen ersten Belag und ein zweites Spreizelement auf einen zweiten Belag wirkt. Die beiden Spreizelemente sind mittig (in Bezug auf die Trägerhörner) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslauf- und Einlaufseite, die zu Schrägverschleiß führen können, werden durch das einseitige Angreifen je einer Feder pro Belag minimiert
- Eine gleichmäßige Kraftaufbringung der Federn aktionsseitig und reaktionsseitig, bzw. auf der Druckstück- und Sattelseite, kann durch eine flexible Einstellung des Mittelstegs realisiert werden. Weiterhin können durch den flexiblen Mittelsteg geringe geometrische Fehlstellungen von Scheibe, Belag und Träger ausgeglichen werden.
- Durch den Mittelsteg kann die aktive Rückstelleinrichtung leicht positioniert und durch den Belaghaltebügel niedergehalten werden. Vorteilhaft kann bei einem Belagwechsel das die Rückstelleinrichtung problemlos entnommen und mitgetauscht werden.
- Durch die Ausnutzung des gesamten Belagschachtes zwischen den Trägerhörner können Spreizelemente beziehungsweise Federn mit einer sehr geringen Federrate genutzt werden, um bei Belagverschleiß ziemlich konstante Kräfte aufzubringen. Durch die langen Federwege können die Spreizelemente tolerant in Bezug auf Federkräfte sein. Die Federwege führen zu einer konstanten Federrate mit geringen Toleranzen
- In einer bevorzugten Ausführungsvariante werden lediglich zwei Federn verwendet.
- Die Spreizelemente können aus kostengünstigen und geometrisch flexiblen Blechen gebildet werden.
- Durch den Versatz mit unterschiedlichen Drehpunkten kann eine niedrigere Federrate abgebildet werden. Vorteilhaft sind keine vielen Windungen (kostenintensiv, platzraubend) nötig.

Weitere Vorteile sind:
Einstellbarkeit (der Zentrierung)
Pro Belagseite die Federkonstante anpassbar, wodurch unterschiedlich für innen/außen und an Umgebung - in Grenzen - besser anpassbar Einbau über mittleren Zentrierbügel - kompensiert ungleichen Kraftaufbau
Evtl. "aktive" Sattelzentrierung
Aktive Belagbefederung durch "Gabel" am Ende der Spinne
Eine andere Ausführung sieht vor, dass jeder Federarm endseitig mit einem Federende mit einem Befestigungsabschnitt ausgebildet ist, welcher in seiner Längsrichtung mit einem Langloch ausgebildet ist, das ein Führungsabschnitt für das Federende der Spreizeinrichtung ist. Damit lässt sich eine Führung bei Relativbewegungen zwischen den Federarmen und den Bremsbelägen verbessern und ein Abheben der Federarme vermeiden.

Hierbei kann jeder Befestigungsabschnitt jeweils auf einer Auflagefläche einer jeweiligen Belagträgerplatte aufliegen, wobei die Langlöcher eines jeden Befestigungsabschnitts jeweils mit einer Anlagefläche der Belagrückenplatte in Zusammenwirkung stehen. Dies ergibt einen einfachen und wirkungsvollen Aufbau.

So kann beispielsweise ein mit der Belagträgerplatte fest verbundener Stift die mit dem jeweiligen Langloch in Zusammenwirkung stehende Anlagefläche der Belagträgerplatte aufweisen, wobei die Auflageflächen jeweils tangential zu der Bremsscheibe verlaufen und einer Ebene liegen. Ein Stift ist ein kostengünstiges Bauteil in hoher Qualität und lässt sich leicht montieren.

In einer Alternative können die Langlöcher eine Führungsöffnung bilden, welche mit einer Kontur der Belagträgerplatte in Zusammenwirkung steht, wobei die Kontur als ein Zapfen oder ein Vorsprung ausgebildet ist. Derartige Konturen können bei Herstellung der Belagträgerplatte als Gussteil einfach angegossen werden. Dabei ist es möglich, dass die Kontur von der Belagträgerplatte in axialer Richtung, in radialer Richtung oder/und in tangentialer Richtung in Bezug auf die Bremsscheibe hervorsteht. Die Kontur kann in einer Variante auch eingeformt sein.

Die Kontur bietet einen weiteren Vorteil, indem sie eine Kodierung der Bremsbeläge bilden kann, z.B. können die zuspannseitigen und die rückenseitigen Bremsbeläge unterschiedliche Konturen aufweisen.

Alternativ kann die Kontur ein Vorsprung sein, der eine Halterung für eine Belaghaltefeder bildet. Dies ist besonders einfach.

In einer noch anderen Ausführung ist jeder Federarm endseitig mit einem Federende mit einem Andruckschenkel ausgebildet, wobei der Andruckschenkel mit einem Führungsvorsprung der dem Reibbelag zugewandten Seite der Belagträgerplatte in Kontakt steht, wobei der Andruckschenkel mit einem ersten Anlageabschnitt mit Druck an einer Anlagefläche der Belagträgerplatte bewegbar anliegt und gleichzeitig mit einem rechtwinklig zu dem ersten Anlageabschnitt angeordneten zweiten Anlageabschnitt an einer Führungsfläche des Führungsvorsprungs bewegbar anliegt. Auf diese Weise lassen sich einfache Federenden verwenden.

In einer Ausführung ist dabei vorgesehen, dass der Führungsvorsprung quaderförmig ausgebildet und unterhalb einer oberen Kante eines Eckbereichs der Belagträgerplatte auf deren Belagseite angeordnet ist. Dies ergibt eine kompakte Anordnung.

Eine weitere Ausführung sieht vor, dass die Spreizeinrichtung zumindest ein zusätzliches Rückstellelement aufweist, welches zusätzlich zu dem Angriffspunkt/den Angriffspunkten der Federarme in einem weiteren Angriffspunkt an der jeweiligen Belagträgerplatte eines Bremsbelags angreift. Dies ist vorteilhaft, da auf diese Weise eine unterstützte Rückstellung der Bremsbeläge bewirkt werden kann. Ein Restschleifmoment kann damit verhindert werden.

Das zumindest eine Rückstellelement kann in einer Ausführung mit einem Abschnitt in einem unteren Bereich der Belagträgerplatte eines zuspannseitigen Bremsbelags auf einer Druckseite der Belagträgerplatte an einem Halteabschnitt befestigt sein, wobei das zumindest eine Rückstellelement mit einem weiteren Abschnitt in einem unteren Bereich einer Bodenplatte eines Zuspannabschnitts des Bremssattels angebracht ist. Auf diese Weise kann vorteilhaft eine Zugkraft durch das Rückstellelement auf den Bremsbelag ausgeübt werden.

Hierbei kann das zumindest eine Rückstellelement als ein Federelement mit einem Zentralabschnitt, zwei Federarmen, zwei Befestigungsabschnitten mit jeweils einer U-förmigen Lasche ausgebildet sein, wobei der Zentralabschnitt an dem Halteabschnitt der Belagträgerplatte befestigt ist, und wobei jeder Federarm mit dem Befestigungsabschnitt an der Bodenplatte angebracht ist. Dies ist eine einfache und kompakte Ausbildung. Die Befestigung an der Belagträgerplatte kann z.B. durch eine Krallverbindung an einem Pin der Belagträgerplatte schnell und einfach erfolgen.

In einer noch weiteren Ausführung ist vorgesehen, dass die Spreizeinrichtung zumindest ein weiteres zusätzliches Rückstellelement aufweist, welches zwischen einem unteren Bereich der Belagträgerplatte des rückenseitigen Bremsbelags und einem Sattelrücken des Bremssattels angeordnet ist. So kann auch der rückenseitige Bremsbelag mit Unterstützung des weiteren Rückstellelementes zurückgestellt werden, um ein Restschleifmoment zu verhindern.

Hierbei kann das zumindest eine weitere Rückstellelement als eine Art Blattfeder mit einem Federkörper mit jeweils einem Federende ausgebildet sein, wobei das eine Federende in einem unteren Bereich der rückenseitigen Belagträgerplatte auf deren Druckseite an einem Halteabschnitt angelenkt ist und das andere Federende an einem Befestigungsabschnitt des Sattelrückens des Bremssattels angelenkt ist. Auf diese Weise kann auch auf den rückenseitigen Bremsbelag eine Zugkraft ausgeübt werden.

In einer alternativen Ausführung weist die Spreizeinrichtung zumindest zwei zusätzliche Rückstellelemente auf, welche sich gegenüberliegen und in Federform ausgebildet sind, wobei jedes Rückstellelement mit einem Ende an einem Abschnitt der Spreizeinrichtung oder/und an einem Belaghaltebügel befestigt sind, und wobei jedes freie Ende eines jeden Rückstellelementes mit jeweils einem Andruckschenkel mit der jeweiligen Belagträgerplatte eines jeden Bremsbelags in Kontakt stehen. Dies ergibt einen einfachen Aufbau, wobei auf jeden Bremsbelag durch ein jeweiliges Rückstellelement eine Druckkraft ausgeübt wird, um eine Rückstelllung der Bremsbeläge zu unterstützen

Dazu kann vorgesehen sein, dass die zumindest zwei zusätzlichen Rückstellelemente jeweils in einem länglichen Zwischenraum zwischen einem Reibbelag und einer Belagseite der jeweiligen Belagträgerplatte angeordnet sind, wobei die Andruckschenkel jeweils mit der Belagseite der jeweiligen Belagträgerplatte in Kontakt stehen und jeweils eine Druckkraft in Richtung von der Bremsscheibe weg weisend auf die Bremsbeläge ausüben. Dies ist vorteilhaft, da die Bremsbeläge nicht oder nur in geringstem Maße verändert werden.

Bei einem Bremsbelagsatz ist vorgesehen, dass die Auflagefläche der Anlagebereiche in einem Winkel zu einer Horizontalen angeordnet ist, wobei der Winkel in einem Bereich von 3 bis 15° liegt. Damit ist eine leichte Relativbewegung von Federarm und Bremsbelag möglich.

Es ist vorteilhaft, wenn die Anlagefläche von der Belagträgerplatte hervorsteht oder in die Belagträgerplatte eingeformt ist, da auf diese Weise eine große Anpassung an unterschiedliche Einbaubedingungen möglich ist.

So kann ein Vorsprung auf der Anlagefläche vorgesehen sein, wobei der andere Vorsprung von der Anlagefläche hervorsteht.

In einer anderen Ausführung können die Anlagebereiche einen Stützabschnitt aufweisen, welcher mit der Anlagefläche und der Auflagefläche in die Belagträgerplatte eingeformt ist, um einen platzsparenden Aufbau zu ermöglichen.

Die Anlagefläche kann auch zu der Seitenfläche der Belagträgerplatte, welche mit dem Reibbelag versehen ist, versetzt in Richtung von dem Reibbelag weg weisend verlaufen.

Zur Führung der Federarme können die Belagträgerplatten mit zumindest einer Kontur versehen sein, die von der jeweiligen Belagträgerplatte hervorsteht oder in die jeweilige Belagträgerplatte eingeformt ist. Damit kann ein Bewegungsweg einfach festgelegt werden, wobei ein Abheben der Federarme, z.B. bei Vibrationen, Stößen usw., verhindert werden kann.

Ein weiterer Vorteil ergibt sich dadurch, dass die zumindest ein Kontur eine Belagkodierung bildet, indem der zuspannseitige Bremsbelag eine andere Kontur aufweist als der rückenseitige Bremsbelag.

In einer weiteren Ausführung kann die Belagträgerplatte eines zuspannseitigen Bremsbelags mit zumindest einem Rückstellelement versehen sein. Auch damit kann eine Kodierung möglich sein.

So kann auch die Belagträgerplatte eines rückenseitigen Bremsbelags mit zumindest einem Rückstellelement versehen sein.

Eine Ausführung der Bremsbeläge sieht vor, dass jeweils ein länglicher Zwischenraum zwischen einem Reibbelag und einer Belagseite der jeweiligen Belagträgerplatte angeordnet ist, wodurch eine einfache Kontaktierung für die Federarme von weiteren Rückstellelementen geschaffen ist.

Weitere vorteilhafte Ausbildungen der Erfindung sind in den Unteransprüchen gekennzeichnet.

Ausführungsbeispiele werden nachfolgend anhand der beigefügten Zeichnungen beschrieben. Nicht unter Anspruch 1 fallen die Ausführungsbeispiele der Fig. 1 bis 7, 20, 21, 23, 24, 34 bis 40.

Es zeigen:
- Figuren 1 und 2: jeweils einen Teilausschnitt einer Scheibenbremse in einer perspektivischen Draufsicht;
- Figur 1a: eine vergrößerte schematische Teilschnittdarstellung der Scheibenbremse nach Figur 1;
- Figuren 3-7: weitere Ausführungsbeispiele anhand einer Einzelheit der Scheibenbremse, jeweils gleichfalls in einer schaubildlichen Darstellung;
- Figuren 8-28: weitere Ausführungsbeispiele, jeweils als Einzelheit der Scheibenbremse in einer perspektivischen Ansicht;
- Figur 29: eine perspektivische Ansicht eines weiteren Ausführungsbeispiels der Scheibenbremse;
- Figur 30: eine perspektivische Ansicht eines noch weiteren Ausführungsbeispiels der Scheibenbremse;
- Figur 31: eine perspektivische Ansicht der Spreizeinrichtung des Ausführungsbeispiels der Scheibenbremse nach Figur 30;
- Figur 32-33: vergrößerte Detaildarstellungen der Spreizeinrichtung nach Figur 31;
- Figur 34-41: weitere Ausführungsbeispiele, jeweils als Einzelheit der Scheibenbremse; und
- Figur 42-44: Ansichten eines noch weiteren Ausführungsbeispiels der Scheibenbremse mit einer Spreizeinrichtung mit zusätzlichen Rückstellelementen.

Die Begriffe "oben", "unten", "links", "rechts" beziehen sich auf die jeweilige Anordnungen in den Figuren.

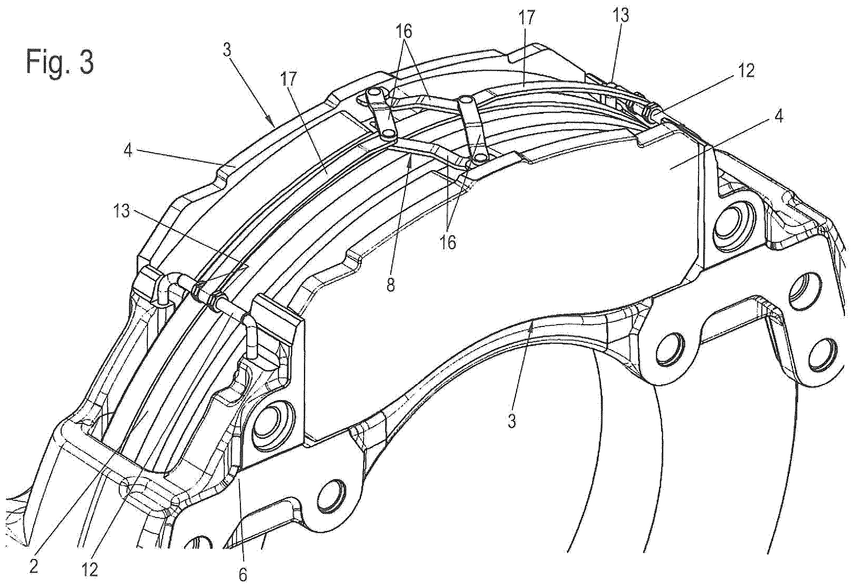

Eine "Oberseite" und eine "Unterseite" eines Bremsbelags 3 bzw. einer Belagträgerplatte 4 beziehen sich immer auf die Einbausituation des Bremsbelags 3. Dabei liegt die Unterseite des Bremsbelags 3 in radialer Richtung näher an einer Bremsscheibendrehachse 2a als die Oberseite dieses Bremsbelags 3, wie z.B. aus Figur 3 deutlich hervorgeht.

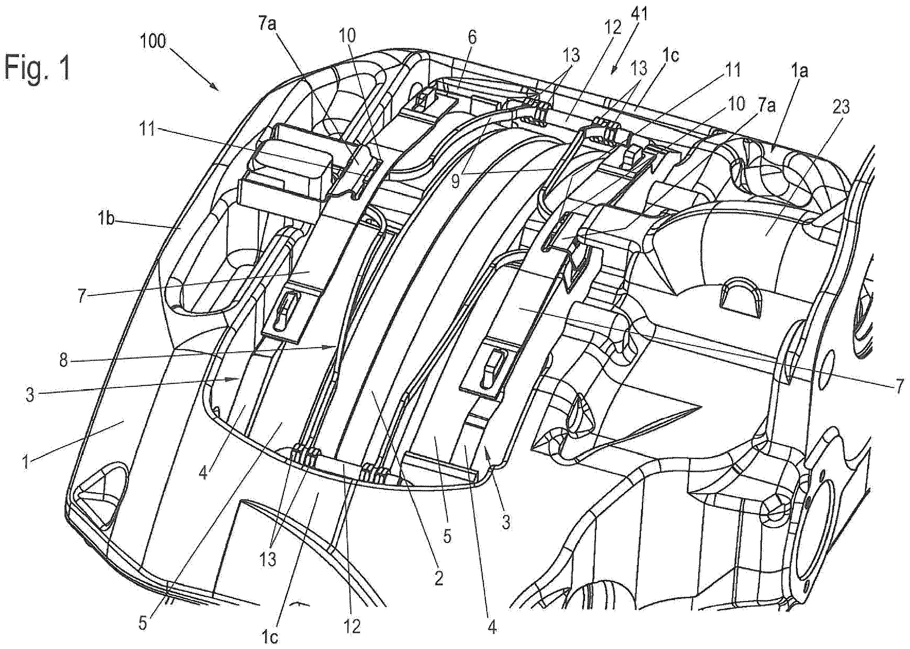

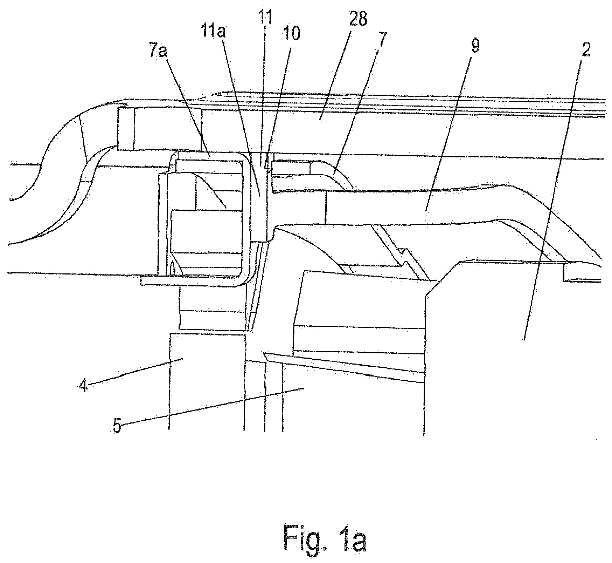

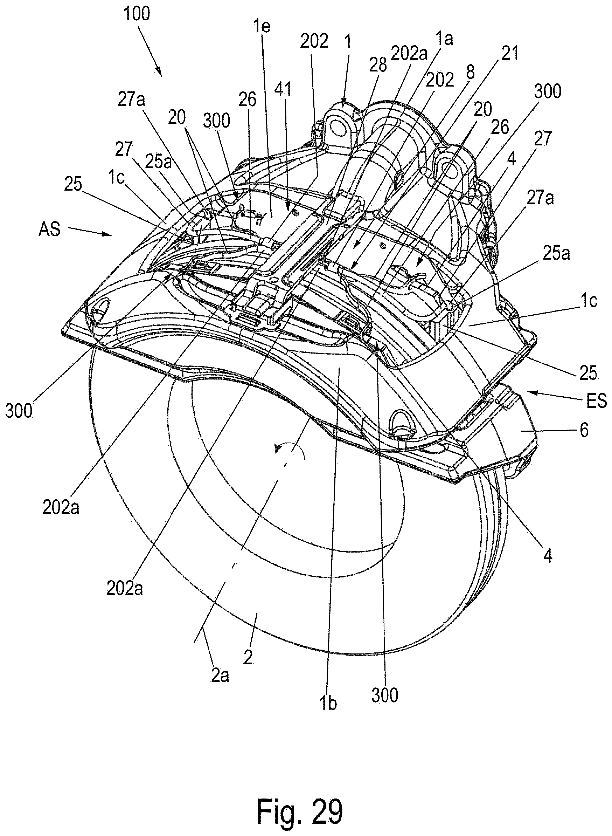

In der **Figur 1** ist ein Teil einer Scheibenbremse 100 für ein Nutzfahrzeug abgebildet, mit einem eine Bremsscheibe 2 übergreifenden Bremssattel 1. Die Bremsscheibe 2 weist eine Bremsscheibendrehachse 2a auf (siehe Figur 29). Der Bremssattel 1 ist bezogen auf die Bremsscheibe 2 axial in Richtung der Bremsscheibendrehachse 2a verschiebbar an einem Bremsträger 6 angeschlossen, wozu der Bremssattel 1 auf nicht dargestellten Führungsholmen gelagert ist, die mit dem ortsfest am Fahrzeug gehaltenen Bremsträger 6 verbunden sind.

Der Bremssattel 1 umfasst einen Zuspannabschnitt 1a, einen Sattelrücken 1b und zwei Zugstreben 1c. Der Zuspannabschnitt 1a verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 1b angeordnet. Der Sattelrücken 1b ist mit dem Zuspannabschnitt 1a an jeweils einem Ende mit jeweils einer Zugstrebe 1c verbunden. Die Zugstreben 1c verlaufen dabei im Wesentlichen rechtwinklig zum Zuspannabschnitt 1a und zum Sattelrücken 1b.

Der Zuspannabschnitt 1a weist einen Innenraum auf, in welchem eine nicht gezeigte Zuspanneinrichtung der Scheibenbremse 100 angeordnet ist. Eine Öffnung des Innenraums weist zur Bremsscheibe 2 und ist mit einer Platte, die als Bodenblech 1e bezeichnet wird, verschlossen (siehe Figur 29).

Der Zuspannabschnitt 1a, der Sattelrücken 1b und die Zugstreben 1c legen in dieser Anordnung eine zentrale Öffnung 41 zwischen sich fest, welche die Bremsscheibe 2 überspannt. Die Öffnung 41 weist eine gedachte Längsmittellinie auf, welche in der Ebene der Bremsscheibe 2 liegt und die gedachten Mitten der Zugstreben 1c verbindet. Außerdem weist die Öffnung 41 eine weitere gedachte Quermittellinie auf, welche eine gedachte Mitte des Zuspannabschnitts 1a eine gedachte Mitte des Sattelrückens 1b verbindet. Die Längsmittellinie und die Quermittellinie schneiden sich in einem gedachten Mittelpunkt, welcher hier als virtuelle Mitte der Öffnung 41 bezeichnet wird.

Im Bremsträger 6 sind Bremsbeläge 3 angeordnet, die im Fall einer Bremsung beidseitig an die Bremsscheibe 2 anpressbar sind. Dabei weist jeder Bremsbelag 3 eine Belagträgerplatte 4 und einen auf der der Bremsscheibe 2 zugewandten Seite daran befestigten Reibbelag 5 auf, der in Funktion, also bei einer Bremsung, gegen die Bremsscheibe 2 gepresst ist.

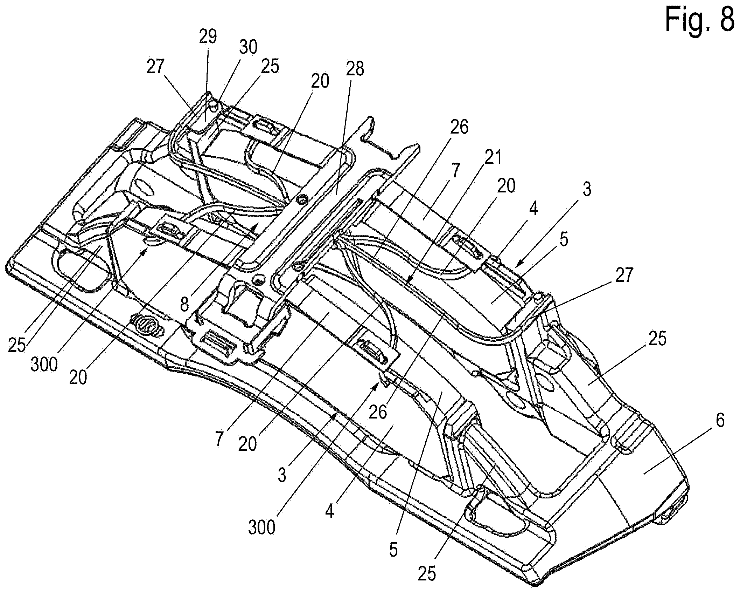

Die Bremsbeläge 3 sind durch die zentrale Öffnung 41 für einen Wechsel und zur Wartung erreichbar. Sie können durch diese zentrale Öffnung 41 in ihre zugehörigen Belagschächte eingesetzt und wieder daraus entnommen werden. Die Belagschächte sind jeweils seitlich durch Bremsträgerhörner 25 festgelegt (siehe Figur 8).

Die Bremsung erfolgt mittels der im Zuspannabschnitt 1a des Bremssattels 1 dort in einem Aufnahmeraum angeordneten Zuspanneinrichtung mit einem Bremshebel, der in einem Dom 23 des Bremssattels 1 positioniert ist. Der zugeordnete Bremsbelag 3, als aktionsseitiger oder auch zuspannseitiger Bremsbelag bezeichnet, kontaktiert zunächst bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 3, bis dieser gleichfalls an der Bremsscheibe 2 reibend zur Anlage kommt.

Nach einem Lösen der Bremse werden die beiden sich gegenüberliegenden Bremsbeläge 3 mittels einer Rückstelleinrichtung so weit von der Bremsscheibe 2 gelöst, dass diese gegenüber den Bremsbelägen 3 frei läuft.

Die Rückstelleinrichtung besteht aus mindestens einer Spreizeinrichtung 8, die an den sich gegenüberliegenden Bremsbelägen 4, entsprechend der Erfindung, gleich wirkend entgegen der Zuspannrichtung angreift.

Bei dem in der Figur 1 gezeigten Beispiel besteht die Spreizeinrichtung 8 aus zwei spiegelverkehrt ausgeformten, ansonsten jedoch identischen Bandfedern 9, die an einer Belaghaltefeder 7 der jeweiligen Belagträgerplatte 4 gehalten sind, wozu an jede Bandfeder 9 eine Lasche 11 angeformt ist, die formschlüssig in einen Schlitz 10 der Belaghaltefeder 7 eingreift.

Dazu ist in **Figur 1a** eine vergrößerte schematische Teilschnittdarstellung der Scheibenbremse 100 nach Figur 1 dargestellt. Der Schnitt verläuft durch eine in Bezug auf Figur 1 vertikale Ebene, die durch die Bremsscheibendrehachse 2a verläuft.

Der Teil der Bandfeder 9, welcher mit der Belagträgerplatte 4 in Kontakt steht, befindet sich in einem mittleren Abschnitt der Bandfeder 9 und wird hier als Druckabschnitt 11a bezeichnet. Der Druckabschnitt 11a ist nach oben durch die Lasche 11 verlängert. Der Druckabschnitt 11a liegt in diesem Beispiel an einem Klemmenelement 7a an, welches zur Halterung der Belagfeder 7 an der Belagträgerplatte 4 in deren mittleren oberen Bereich angebracht ist. Ein Abschnitt des Klemmenelementes 7a erstreckt sich durch den Schlitz 10 der Belaghaltefeder 7. Dieser Schlitz 10 ist somit schon vorhanden und kann für den formschlüssigen Eingriff der Lasche 11 der Bandfeder 9 verwendet werden.

Der Abschnitt des Klemmenelementes 7a, dessen Außenseite mit dem Druckabschnitt 11a der Bandfeder 9 in Kontakt steht, liegt mit seiner Innenseite an der Belagträgerplatte 4 an. Auf diese Weise wird die Druckkraft des Druckabschnitts 11a der Bandfeder 9 auf die Belagträgerplatte 4 übertragen. Diese Erläuterungen gelten natürlich auch für die andere Bandfeder 9.

Zudem ist in Figur 1a ein Belaghaltebügel 28 (siehe auch Figur 8) gezeigt, welcher über den Bremsbelägen 3 in Querrichtung der Öffnung 41 bzw. in Richtung der Bremsscheibendrehachse 1a zwischen dem Zuspannabschnitt 1a und dem Sattelrücken 1b angeordnet und an diesen befestigt ist. Der Belaghaltebügel 28 drückt hier mit Abschnitten seiner Unterseite auf die Klammerelemente 7a und somit auf die Belaghaltefedern 7, wodurch die Bremsbeläge 3 in ihren Belagschächten gehalten werden.

Endseitig ist die jeweilige Bandfeder 9 an einem Bügel 12 axial gesichert gehalten, der am Bremsträger 6 befestigt ist, wobei beide Bandfedern 9 abständig zueinander angeordnet sind. Zur axialen Sicherung sind auf dem Bügel 12, das jeweilige Ende der Bandfeder 9 zwischen sich einklemmend, Sicherungen 13 vorgesehen.

Bei einer Zuspannung der Bremsbeläge 3 werden die Bandfedern 9 unter Aufbau einer Federspannung entsprechend verformt, so dass nach einem Lösen der Bremsung die Bremsbeläge 3 durch die bereitstehende Federkraft aus ihrer Bremsstellung gleichmäßig herausgedrückt werden.

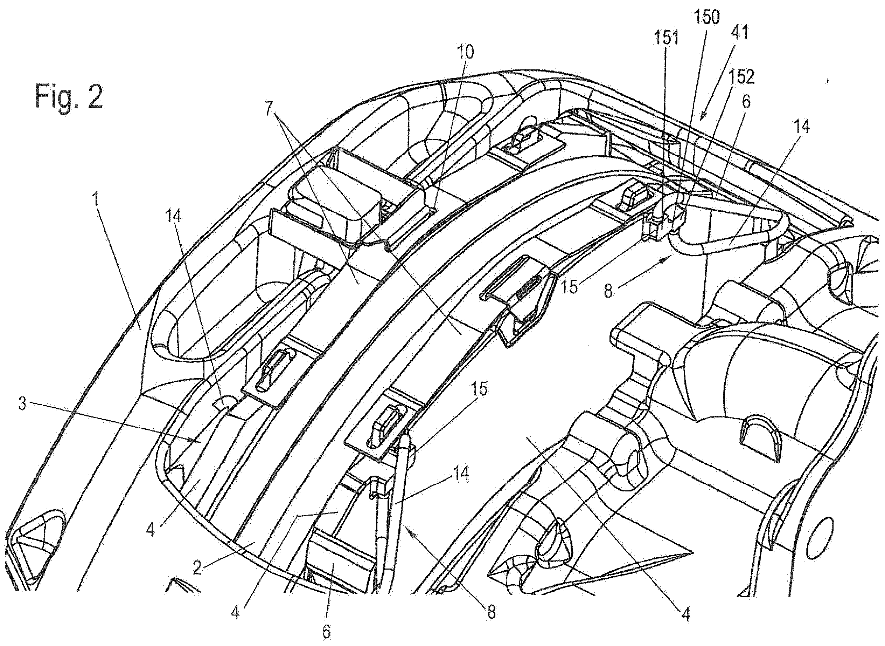

In der **Figur 2** ist ein weiteres Beispiel einer Scheibenbremse dargestellt, bei dem die Spreizeinrichtung 8 jeweils aus einem Federbügel 14, vorzugsweise aus Federdraht geformt, gebildet ist. Dabei ist an jedem Endbereich der Belagträgerplatte 4 auf der den Belaghaltefedern 7 zugewandten Seite schwenkbar ein solcher Federbügel 14 fest gehalten, wozu an der Belagträgerplatte 4 eine Aufhängung 15 angeordnet ist, in die die Enden des Federbügels 14, radial zur Bremsscheibe 2 betrachtet, versetzt zueinander und verdrehbar gehalten sind.

In der Figur 2 umfasst die Aufhängung 15 für jedes Ende des Federbügels 14 einen rechteckigen Lagerabschnitt 151, 152, welche durch eine Verbindung 150 derart verbunden sind, dass der Lagerabschnitt 151 von der Verbindung 150 nach oben hervorsteht und der Lagerabschnitt 152 nach unten hervorsteht.

Die Aufhängung 15 kann z.B. einstückig mit der Belagträgerplatte 4 ausgebildet sein, beispielsweise durch mechanische Bearbeitung. Es ist auch möglich, dass die Aufhängung 15 an der Belagträgerplatte 4 befestigt ist.

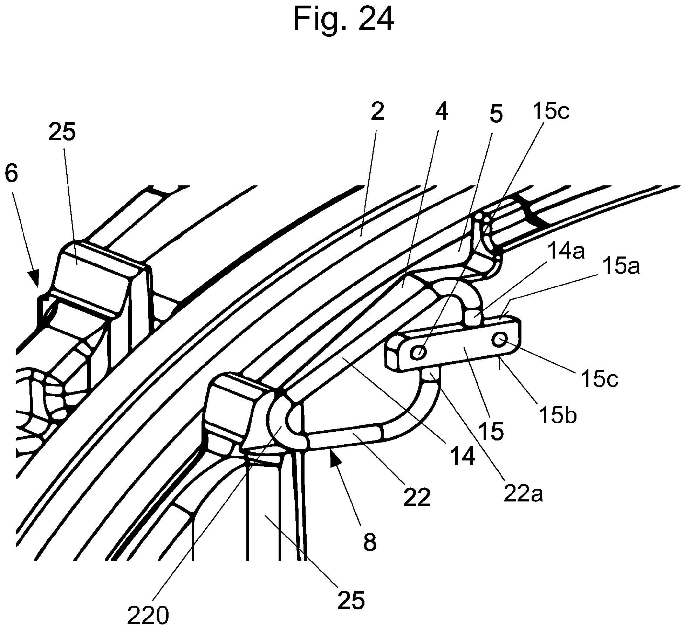

Die Aufhängung 15 kann auch z.B. eine rechteckige Platte sein, wie sie weiter unten (Figur 24) noch ausführlich beschrieben wird.

Ein Federbügel 14 liegt an jeweils einem zugeordneten Bremsträgerhorn des Bremsträgers 6 an und zwar auf der der Bremsscheibe 2 gegenüberliegenden Seite, so dass bei einem Zuspannen der Bremsbeläge 3 sich die Federbügel 14 unter Verspannung verformen. Bei einem Lösen der Bremse werden die Bremsbeläge 3 durch die Federkraft der Federbügel 14 entgegen ihrer Zuspannrichtung zurückgeschoben, vergleichbar dem Ausführungsbeispiel nach Figur 1.

In der **Figur 3** ist ein weiteres Ausführungsbeispiel der Spreizeinrichtung 8 dargestellt, wobei hier auf die Abbildung des Bremssattels verzichtet ist.

Diese Spreizeinrichtung 8 besteht aus zwei, jeweils an sich gegenüberliegenden Seiten des Bremsträgers 6 befestigten Bügeln 12 angeschlossenen Blattfedern 17, von denen jede an ihren einander zugewandten, freien Enden zwei Scherenglieder 16 trägt, von denen eines am aktionsseitigen Bremsbelag 3 und das andere am reaktionsseitigen Bremsbelag 3 schwenkbar befestigt ist.

Die zur Spreizung aufzubringende Federkraft wird bei dieser Ausführungsvariante durch die Blattfedern 17 erreicht, die sich beim Zuspannen der Bremsbeläge 3 radial nach außen wölben und beim Lösen der Bremse, entsprechend der Federwirkung, strecken, bei gleichzeitiger Streckung der angeschlossenen Scherenglieder 16 und Spreizung der Bremsbeläge 3 auseinander.

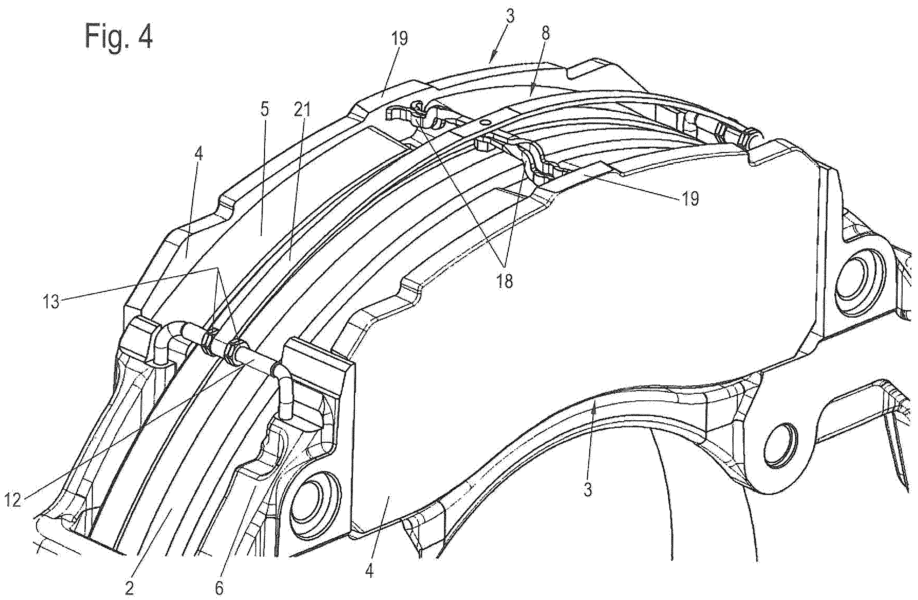

In der **Figur 4** ist eine weitere Variante der Spreizeinrichtung 8 dargestellt, die zwei gekreuzte Federschenkel 18 aufweist, die gelenkig an einem Haltebogen 21 befestigt sind. Dieser ist, vergleichbar der Befestigung der Blattfedern 17 am Bremsträger 6, ebenfalls an damit verbundenen Bügeln 12 gehalten, der die Bremsscheibe 2, bezogen auf deren Dicke, in einem Teilumfang mittig überspannt. Der Haltebogen ist nicht der Belaghaltebügel 28.

Die gebogenen Enden der gekreuzten Federschenkel 18 liegen jeweils an einer Anlage 19 der Belagträgerplatte 4 an, so dass sich diese scherenartige Konstruktion bei einem Zuspannen der Bremse, also bei einem axialen Aufeinanderzubewegen der Bremsbeläge 3 spreizen. Dabei sind die Federschenkel 18 am Haltebogen 21 befestigt, so dass die Federschenkel 18 beim Zuspannen der Bremsbeläge 3 vorgespannt werden und die Bremsbeläge 3 nach einem Lösen der Bremse durch diese Vorspannung voneinander gespreizt werden.

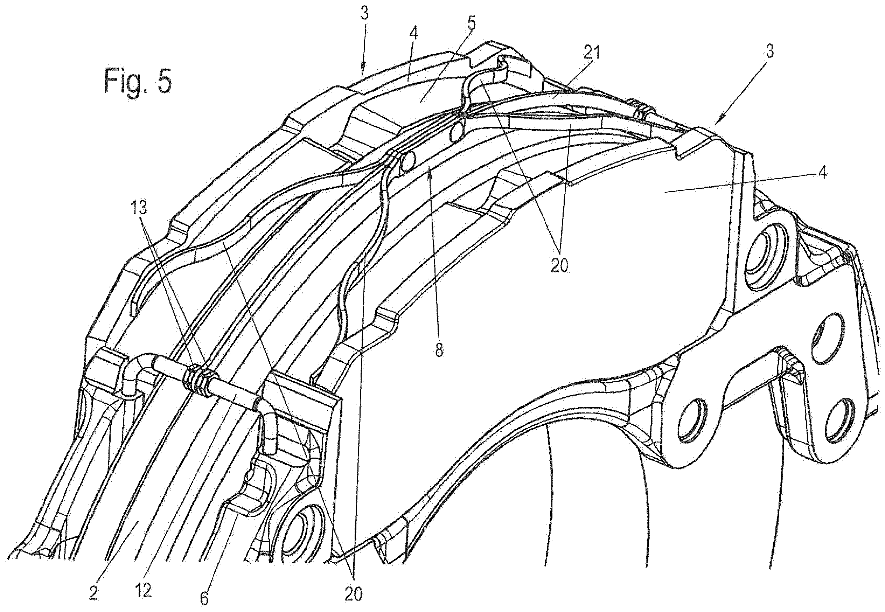

Die **Figur 5** gibt eine Spreizeinrichtung 8 wieder, die aus zwei identischen Federarmen 20 besteht, die im Mittenbereich miteinander in Längsrichtung der Öffnung 41 verbunden sind, ebenso wie mit einem Haltebogen 21, der über Bügel 12 am Bremsträger 6 befestigt ist.

Hierbei liegen die Federarme 20 an zwei sich gegenüberliegenden Endbereichen der Belagträgerplatte 4 an und zwar in einem oberseitig vorstehenden Randbereich. Die Enden der Federarme 20 sind gleichfalls gebogen, so dass ein Gleiten an der Belagträgerplattenfläche beim Zuspannen und Lösen der Bremse problemlos möglich ist. Auch hierbei wird durch die beim Zuspannen sich ergebende Vorspannung eine Spreizung der Bremsbeläge 3 nach einem Lösen der Bremse möglich.

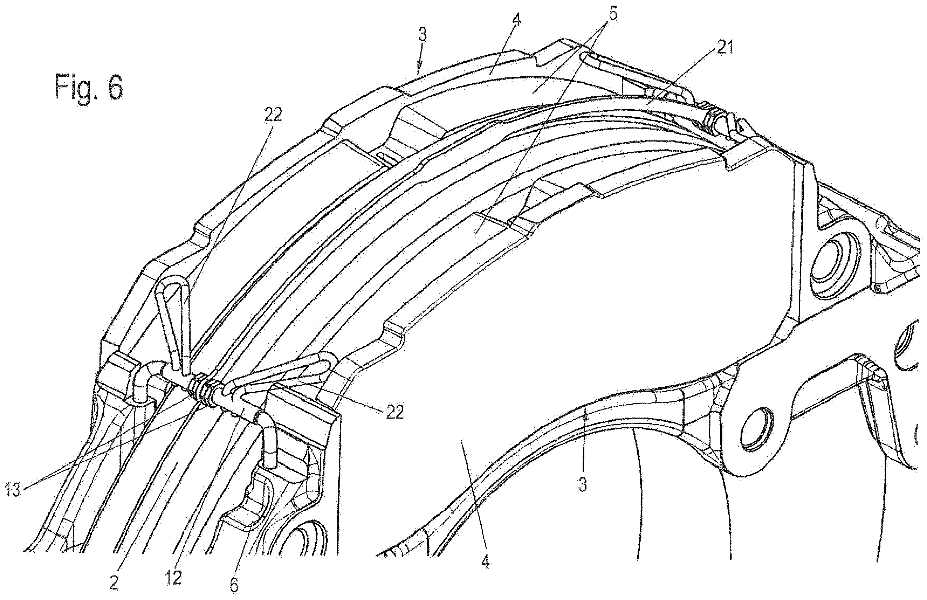

In der **Figur 6** besteht jede Spreizeinrichtung 8 aus einem drehbar mit dem Bügel 12 verbundenen Anlageschenkel 22, der schleifenförmig aus einem Federdraht gebildet ist und der gleichfalls, ebenso wie die Federarme 20 nach der Figur 5, am Randbereich der jeweils zugeordneten Belagträgerplatte 4 anliegt, wobei die beiden federnde Anlageschenkel 22 jeder Seite auf den einander zu gewandten Seiten der Belagträgerplatten 4 anliegen.

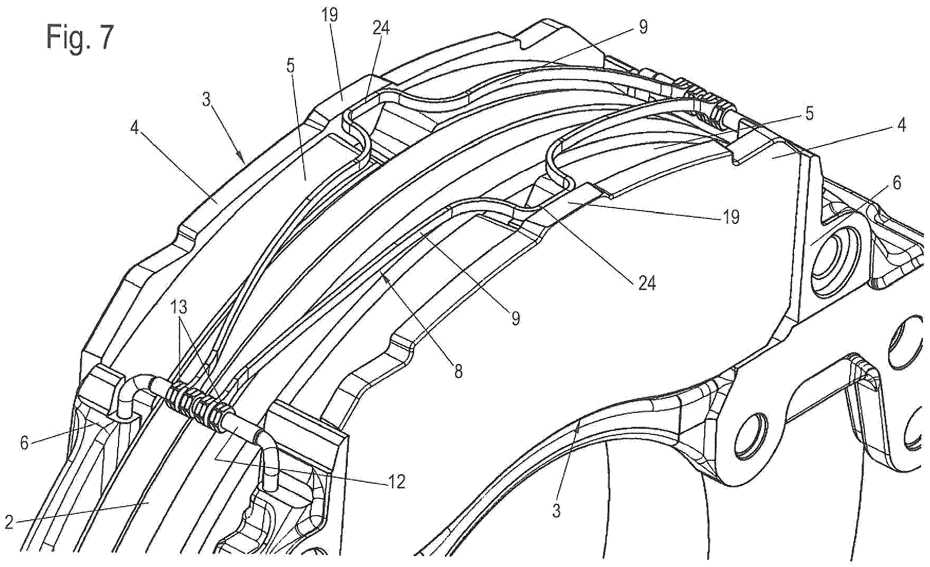

In der **Figur 7** schließlich ist eine weitere Variante dargestellt, die im Wesentlichen vergleichbar ist mit der Ausführung nach Figur 1. Auch hier greift die jeweils einem Bremsbelag 3 zugeordnete Bandfeder 9 zentral an der Belagträgerplatte 4 an, vorzugsweise an einer Anlage 19, wobei hierzu die Bandfeder 9 mit einem ausgestellten Anlagebügel 24 versehen ist.

Zur zentralen Einstellung beider Bandfedern 9, bezogen auf die Bremsscheibe 2, sind die Bandfedern 9 axial verschieblich an den beiden sich gegenüberliegenden Bügeln 12 befestigt.

Bei dem in der **Figur 8** gezeigten Beispiel ist der Haltebogen 21 C-förmig gestaltet, mit einem sich, bezogen auf die Dicke der Bremsscheibe 2 mittig dazu angeordneten und sich in deren Umfangsrichtung erstreckenden Mittelschenkel 26, an den sich beidseitig jeweils ein abgewinkelter Endschenkel 27 anschließt.

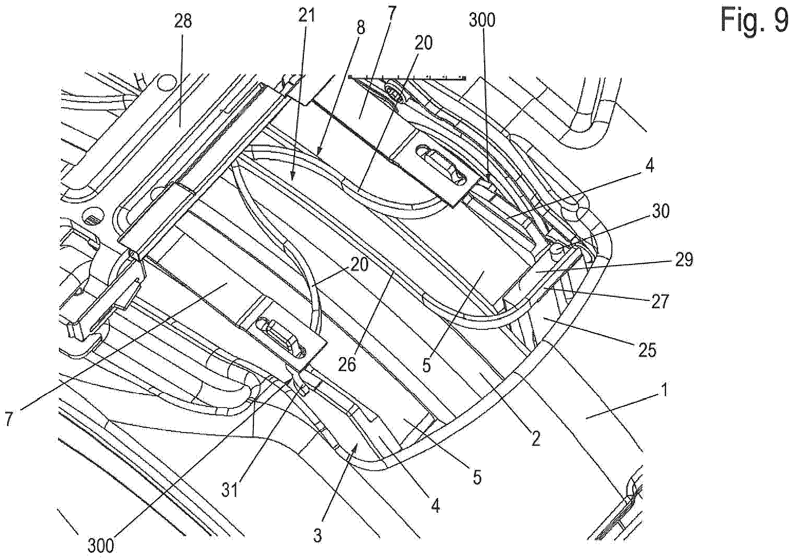

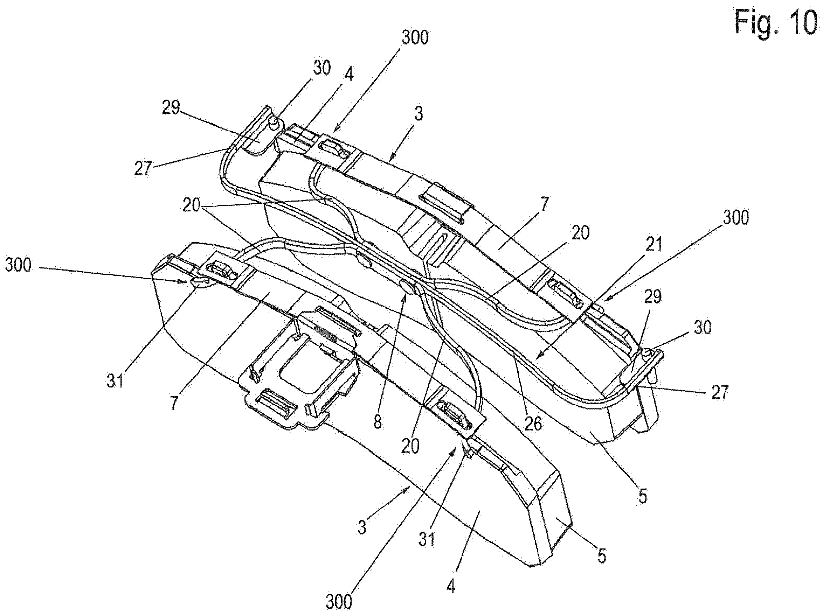

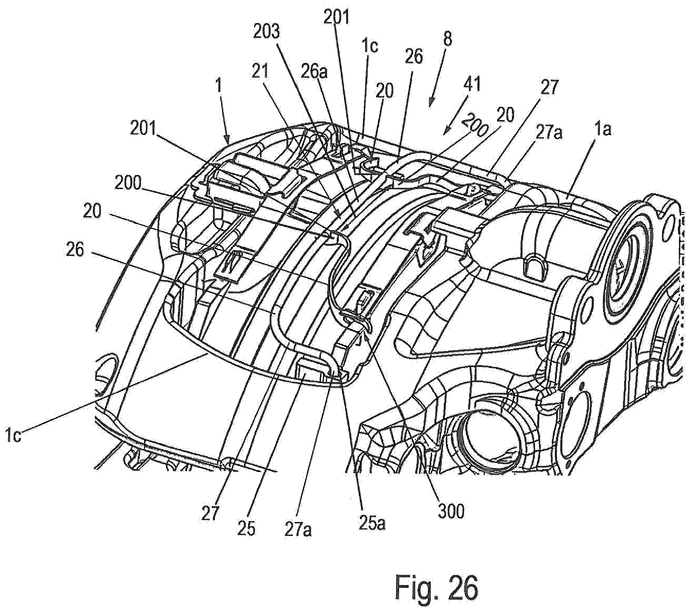

In der **Figur 9****,** die einen Teilausschnitt einer komplettierten Scheibenbremse 100 wiedergibt, während die Figur 8 lediglich den Bremsträger 6 mit den eingesetzten Bremsbelägen 3 zeigt, ist ebenso wie in der **Figur 10** deutlich zu erkennen, dass die Endschenkel 27 auf den einander zugewandten Seiten mit Laschen 29 versehen sind, an denen Zapfen 30 gehalten sind, die in Bohrungen 25a (siehe Figur 26) der Bremsträgerhörner 25 eingreifen.

Dabei bildet der Haltebogen 21 insofern eine Zentriereinrichtung für den Bremssattel 1, als der Bremsträger 6, an dem der Haltebogen 21 befestigt ist, ein ortsfestes Teil bildet, dem gegenüber der Bremssattel 1 verschieblich gelagert ist, so dass nach einem Lösen der Bremse und einem Spreizen der Spreizeinrichtung 8, d.h. einem Auseinanderdrücken der Bremsbeläge 3 der Bremssattel 1 in eine zentrierte Stellung geführt wird.

Die Figur 10 zeigt im Übrigen die Bremsbeläge 3 mit der Spreizeinrichtung 8 und dem Haltebogen 21 in Alleinstellung.

In den Figuren 8 und 9 ist weiterhin zu erkennen, dass ein am Bremssattel 1 gehaltener Belaghaltebügel 28 sich an den Belaghaltefedern 7 der Bremsbeläge 3 abstützt und den Haltebogen 21 niederhält und verspannt.

Wie der Figur 10 zu entnehmen ist, sind die Federarme 20 der Spreizeinrichtung 8 im Mittenbereich fest miteinander verbunden, entsprechend der Figur 5.

Weiterhin ist in den Figuren 9 und 10 erkennbar, dass die Federarme 20 jeweils an ihrem freien Ende Stützschenkel 31 aufweisen, die sich an der den Belaghaltefedern 7 zugeordneten Rändern der Belagträgerplatten 4 abstützen und durch die ein Lösen der Federarme 20 aus ihrer Anlage an der jeweiligen Belagträgerplatte 4 bei Rüttelbewegungen im Fahrbetrieb verhindert wird. Dabei sind die Stützschenkel 31 zwischen den Belaghaltefedern 7 und der zugeordneten Belagträgerplatte 4 verspannt, wobei die Belagträgerplatte 4 einen nicht dargestellten Ausschnitt aufweist, durch den der jeweilige Stützschenkel 31 geführt ist. Damit wird ein Kippen der Federarme 20 verhindert.

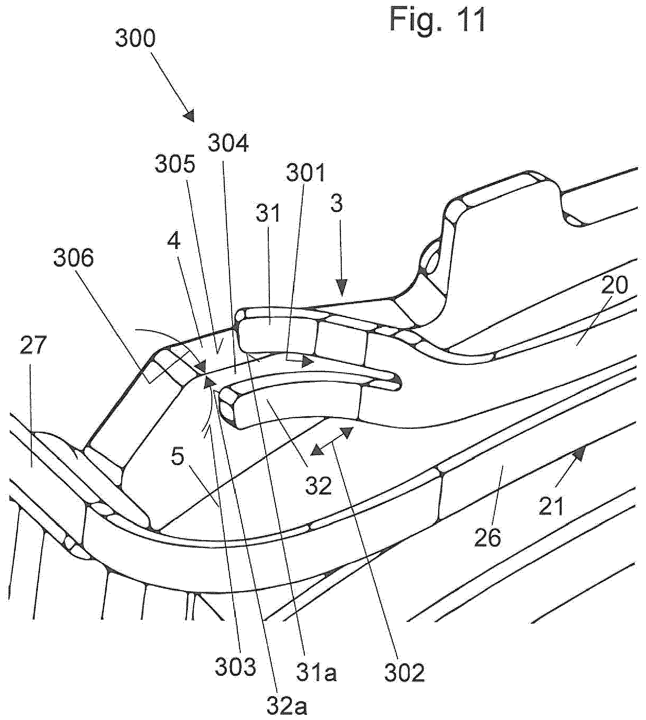

In vergrößerter Darstellung ist dies in der **Figur 11** zu sehen, die weiterhin einen an den Federarm 20 gekrümmt angeformten Andruckschenkel 32 eines Federendes 300 wiedergibt, der an der dem Reibbelag 5 zugewandten Randfläche der Belagträgerplatte 4 anliegt und wie vorgenannt eine Kippsicherung bildet. Überdies wird verhindert, dass der Reibbelag 5 gegen den Federarm 20 schlägt. Dabei bilden der auf einer dem Bremsträger 6 abgewandten Schmalseite der Belagträgerplatte 4 aufliegende Stützschenkel 31 und der Andruckschenkel 32 die Zinken einer Gabel mit einem Schlitz 301 als die das Federende 300 des Federarmes 20 ausgebildet ist. Wie bereits erwähnt, ist das Federende 300 des Federarmes 20 im Anlagebereich mit der Belagträgerplatte 4, also der Andruckschenkel 32 in Richtung der Belagträgerplatte 4 konvex gekrümmt, um so ein behinderungsfreies Gleiten an der Belagträgerplatte 4 zu gewährleisten.

Der Stützschenkel 31 des Federendes 300 liegt mit einem Auflageabschnitt 31a seiner dem Schlitz 301 zugewandten Unterseite auf einer Auflagefläche 305 der Oberseite der Belagträgerplatte 4 auf. Der Andruckschenkel 32 steht mit einem Anlageabschnitt 32a, welcher zu der Belagträgerplatte 4 weist, mit einer Anlagefläche 303 der Belagträgerplatte 4 in Kontakt. Die Anlagefläche 303 befindet sich auf der Seite der Belagträgerplatte 4, auf welcher der Reibbelag 5 aufgebracht ist. Dabei ist die Anlagefläche 303 oberhalb des Reibbelags 5 in einem Endbereich der Belagträgerplatte 4 angeordnet.

Die Auflagefläche 305 auf der Oberseite der Belagträgerplatte 4 kann in einem Winkel 306 zu einer gedachten Horizontalen mit einem Betrag in einem Bereich von beispielsweise 5 bis 15° angeordnet sein.

Die Auflagefläche 305 bildet eine Führung für den Stützschenkel 31 des Federendes 300 des Federarms 20 bei dessen Bewegungen in Bewegungsrichtungen 302 (z.B. aufgrund von Verschleißausgleich) und einen Anschlag für diesen in einer Richtung auf die Oberseite der Belagträgerplatte 4 hin.

Zudem bildet der Kontakt zwischen der Auflagefläche 305 der Belagträgerplatte 4 und dem Stützschenkel 31 des Federendes 300 des Federarms 20 eine Abfederung des Bremsbelags 3 in radialer Richtung. Zudem wird die Belagträgerplatte 4 und somit der Bremsbelag 3 durch diesen Kontakte mit den Stützschenkeln 31 der Federenden 300 nach unten in seinen Belagschacht gedrückt und abgefedert. Wenn die Spreizeinrichtung 8 wie z.B. in Fig. 1a gezeigt durch den Belaghaltebügel 28 fixiert ist, könnten unter Umständen auch die Bremsbeläge 3 ohne Belaghaltefedern 7 ausgeführt sein.

Die Anlagefläche 303 bildet eine Führung für den Andruckschenkel 32 des Federendes 300 des Federarms 20 bei dessen Bewegungen in Bewegungsrichtungen 302 (z.B. bei Verschleißausgleich) und einen Anschlag für diesen in einer Richtung auf die Belagträgerplatte 4 parallel zu einer Bremsscheibendrehachse 2a hin.

In einer nicht gezeigten Ausführung kann die Anlagefläche 303 von der Belagträgerplatte 4 hervorstehen oder in die Belagträgerplatte 4 eingeformt sein, beispielsweise als eine Nut.

Die Anlagefläche 303 und die Auflagefläche 305 können als Führungsflächen mit einer besonderen Oberflächenbearbeitung versehen sein, z.B. geschliffen, um einen geringen Reibwiderstand aufzuweisen.

Es ist zudem möglich, das ein Vorsprung 304 vorgesehen ist, welcher von der Belagträgerplatte 4 derart zu dem Federende 300 in den Schlitz 301 hervorsteht. Auf diese Weise bildet der Vorsprung eine zusätzliche Führung für das Federende 300.

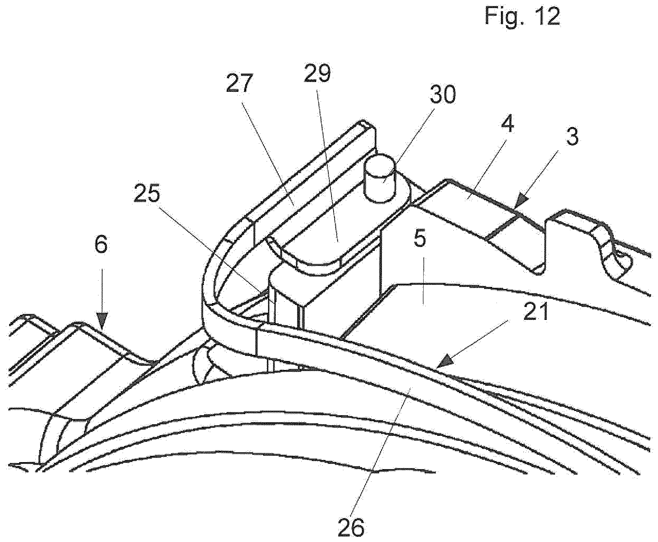

In der **Figur 12** ist ein vergrößerter Ausschnitt des Haltebogens 21 im Anbindungsbereich an dem Bremsträgerhorn 25 abgebildet, wobei die Lasche 29 auf einer planen Stirnseite des Bremsträgerhorns 25 aufliegt. Der Zapfen 30 kann als Niet ausgebildet und in eine Bohrung 25a (siehe Figur 26) des Bremsträgerhorns 25 eingesteckt sein. Es ist auch möglich, dass der Zapfen 30 an dem Bremsträgerhorn 25 angeformt oder als ein separates Bauteil schon vorher fest eingesetzt ist.

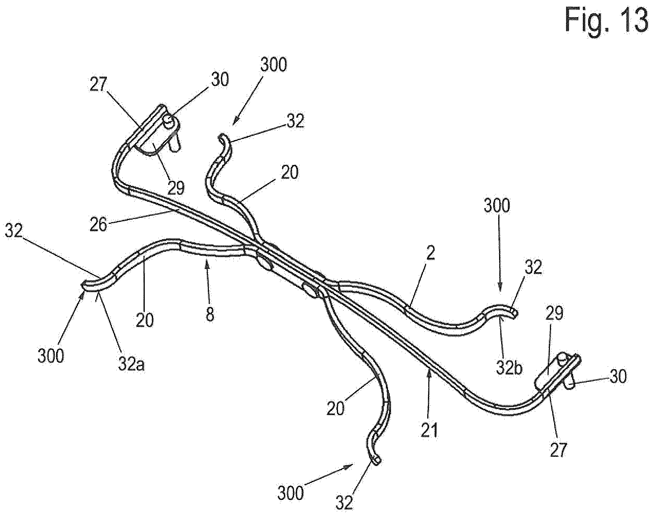

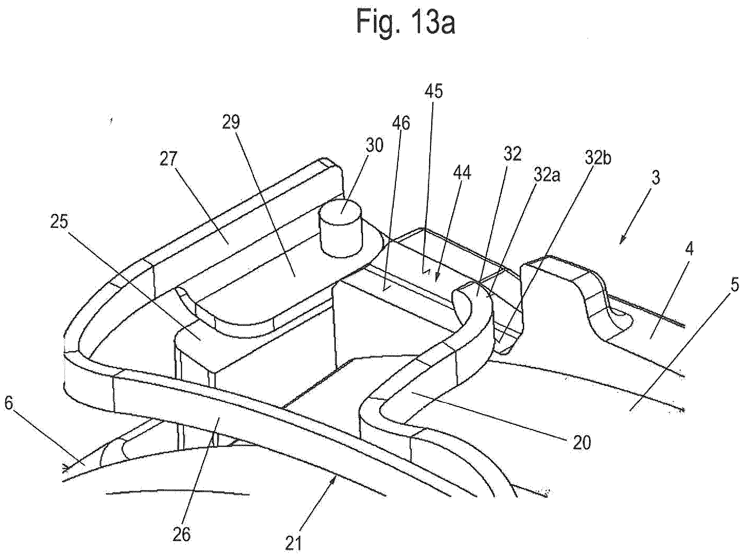

In der **Figur 13** ist die Spreizeinrichtung 8 entsprechend den Figuren 8-13 als Einzelheit erkennbar. An den freien Enden der Federarme 20 sind hier jeweilige Federenden 300 als gebogene Andruckschenkel 32 ausgeführt. Die Andruckschenkel 32 weisen jeweils den in Figur 11 oben schon angegebenen Anlageabschnitt 32a auf. Zudem sind die Andruckschenkel 32 hier an ihren Unterseiten mit einem jeweiligen Auflageabschnitt 32b versehen, der für einen Auflagekontakt wie unten noch erläutert wird mit einer geeigneten Oberflächenbeschaffenheit mit geringem Reibkoeffizienten versehen ist.

In **Figur 13a** ist hierzu eine vergrößerte Teilansicht des Endbereichs einer Belagträgerplatte 4 eines Bremsbelags 3 zusammen mit einem solchen Andruckschenkel 32 gezeigt. Der Bremsbelag 3 ist in seinem Belagschacht zwischen zwei Bremsträgerhörnern 25 eingesetzt, von denen hier nur eins dargestellt ist. An diesem Bremsträgerhorn 25 ist wie oben im Zusammenhang mit Figur 12 beschrieben ein Endschenkel 27 des Haltebogens 21 angebracht.

Der Endbereich der Belagträgerplatte 4 ist hier mit einem Stützabschnitt 44 versehen, welcher in die Belagträgerplatte 4 eingeformt ist, z.B. durch mechanische Bearbeitung. Der Stützabschnitt 44 weist eine Anlagefläche 45 und eine Auflagefläche 46 auf. Durch diese mechanische Bearbeitung kann außerdem die Toleranzlage deutlich verbessert werden. So können die Abstände von Mitte der Bremsscheibe 2 bzw. Mittelschenkel und Angriffsfläche an der Belagträgerplatte 4 / Bremssattel 1 zuspannseitig bzw. druckstückseitig recht konstant gehalten werden.

Die Anlagefläche 45 verläuft parallel zu der Seitenfläche der Belagträgerplatte 4 versetzt, welche mit dem Reibbelag 5 versehen ist, wobei die Anlagefläche 45 von dieser Seitenfläche in Richtung der Bremsscheibendrehachse 2a, also axial, durch eine axiale Tiefe der Auflagefläche 46 beabstandet ist.

Der Andruckschenkel 32 ist in dem Stützabschnitt 44 angeordnet und steht mit seinem Anlageabschnitt 32a mit der Anlagefläche 45 in Kontakt. Gleichzeitig liegt der Andruckschenkel 32 mit seinem Auflageabschnitt 32b auf der Auflagefläche 46 auf. Der Andruckschenkel 32 wird auf diese Weise bei seiner Bewegung durch seinen Kontakt mit dem Stützabschnitt 44 durch diesen geführt. Die Anlagefläche 45 und die Auflagefläche 46 können durch Bearbeitung für diese Bewegung mit besonderen Reibeigenschaften ausgestattet sein.

Zudem wird die Belagträgerplatte 4 und somit der Bremsbelag 3 durch diese Kontakte mit den Andruckschenkeln 32 der Federenden 300 nach unten in seinen Belagschacht gedrückt und abgefedert. Wenn die Spreizeinrichtung 8 wie z.B. in Fig. 1a gezeigt durch den Belaghaltebügel 28 fixiert ist, könnten unter Umständen auch die Bremsbeläge 3 ohne Belaghaltefedern 7 ausgeführt sein.

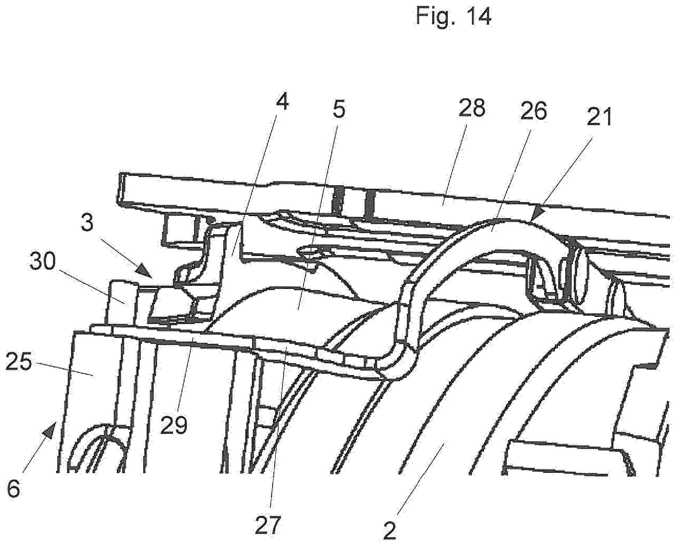

Während die **Figur 14** einen Teilausschnitt des Anbindungsbereiches des Haltebogens 21 am Bremsträgerhorn 25 in vergrößerter Ansicht wiedergibt. Als Kippsicherung ist hierbei ein Rückhalteblech 40 vorgesehen, das am Mittelschenkel 26 befestigt ist und an dem der Belaghaltebügel 28 anliegt.

Im Unterschied zu dem in der Figur 13 gezeigten Ausführungsbeispiel ist die Lasche 29 nicht gegenüber dem Endschenkel 27 abgewinkelt, sondern wird verlaufsgleich durch diesen gebildet, durch entsprechende Formung des Haltebogens 21.

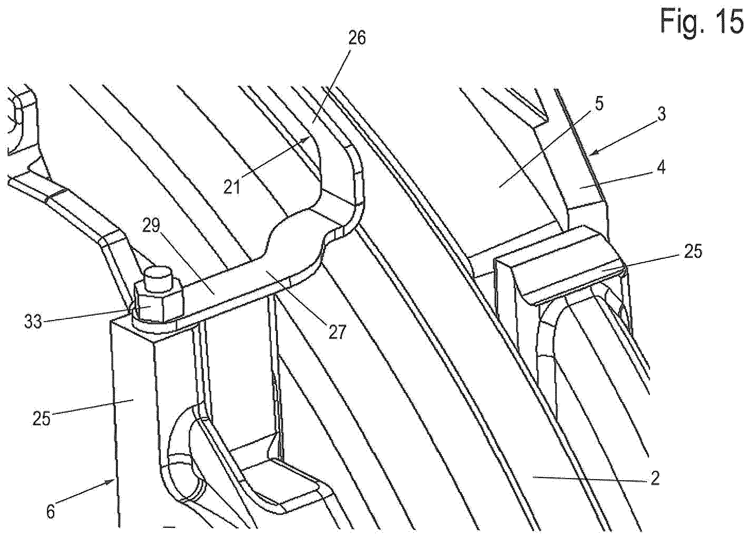

Eine dazu vergleichbare Ausführungsvariante ist in der **Figur 15** dargestellt, bei der allerdings die Sicherung des Endschenkels 27 bzw. der Lasche 29 mittels einer Mutter 33 erfolgt, die auf einem Gewindezapfen des Bremsträgerhorns 25 aufgeschraubt ist und die Lasche 29 am Bremsträgerhorn 25 hält.

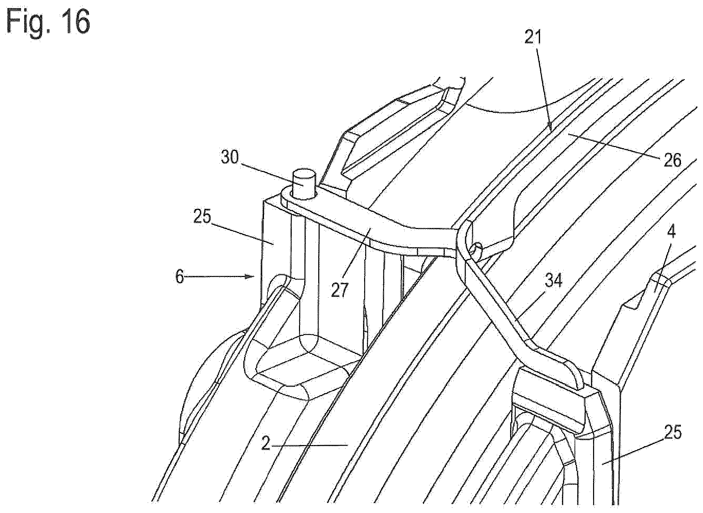

In der **Figur 16** ist entgegengesetzt zum Endschenkel 27 des Haltebogens 21 eine Stützlasche 34 abgewinkelt, die an der Stirnseite des zugeordneten Bremsträgerhorns 25 aufliegt und die, vergleichbar dem Stützschenkel 31 nach Figur 11, eine radiale Sicherung für den Haltebogen 21 und damit für die Spreizeinrichtung 8 bildet.

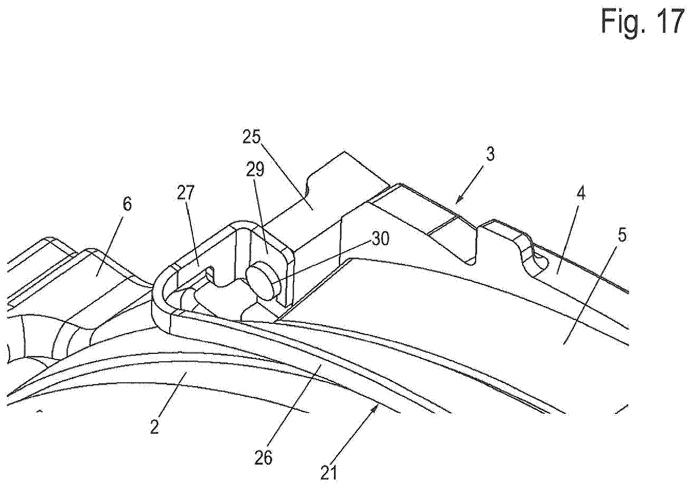

Eine weitere Variante der Befestigung des Haltebogens 21 am Bremsträgerhorn 25 ist in der **Figur 17** erkennbar, die einen vergrößerten Teilausschnitt des entsprechenden Bereiches des Bremsträgers 6 wiedergibt.

Hier nun ist der Endschenkel 27 endseitig etwa parallel zum Mittelschenkel 26 abgewinkelt und auf den im Bremsträgerhorn 25 befestigten Zapfen 30 aufgesteckt.

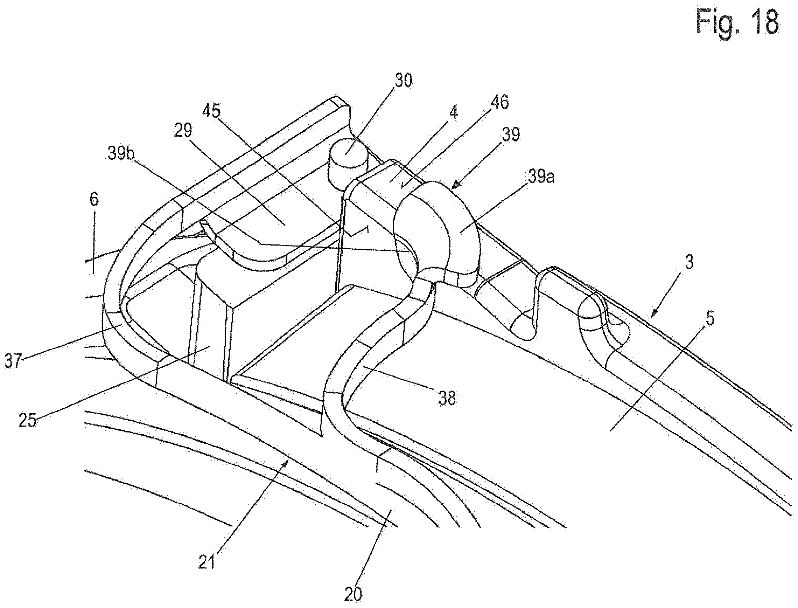

In der **Figur 18** ist eine Ausführungsvariante der Spreizeinrichtung 8 abgebildet, bei der die Federarme 20, von denen der Endabschnitt eines Federarmes 20 dargestellt ist, einerseits die Funktion des Haltebogens 21 übernimmt und andererseits die Funktion des Spreizens.

Hierzu ist der Federarm 20 in seinem Endbereich in Längsrichtung gespalten unter Bildung eines Federstegs 38 und eines Anschlussstegs 37. Dabei übernimmt der mit einer endseitig angeformten Winkellasche 39 versehene Federsteg 38 die Spreizfunktion, d.h. er wird beim bremsbedingten Verschieben des Bremsbelages 3 gegen die Federkraft gespannt und drückt nach dem Lösen der Bremse den Bremsbelag 3 in seine Endstellung, wobei die Winkellasche an der Belagträgerplatte 4 sowohl in Spannrichtung wie auch in radialer Richtung anliegt, also an der oberen Kante der Belagträgerplatte 4.

Die Winkellasche 39 ist ähnlich wie die Ausführung nach Figur 11 in zwei verschiedene Schenkel aufgeteilt und weist einen Stützschenkel 39a und einen rechtwinklig dazu liegenden Andruckschenkel 39b auf. In diesem Beispiel sind der Stützschenkel 39a und der Andruckschenkel 39b jedoch nicht getrennt, sondern zusammen verbunden in Form der Winkellasche 39 ausgebildet. Der Stützschenkel 39a steht in radialer Richtung zur Bremsscheibendrehachse 2a in Kontakt mit der Auflagefläche 46, wobei der Andruckschenkel 39b in axialer Richtung parallel zu der Bremsscheibendrehachse 2a in Kontakt mit der Anlagefläche 45 steht.

Der Anschlusssteg 37 hingegen ist endseitig mit einer einen Zapfen 30 aufweisenden Lasche 29 versehen, wobei der Zapfen 30 in eine Bohrung 25a (siehe Figur 26) des Bremsträgerhorns 25 eingesteckt ist, um, wie beschrieben, eine Zentrierung des Bremssattels 1 nach einem Bremsvorgang zu ermöglichen.

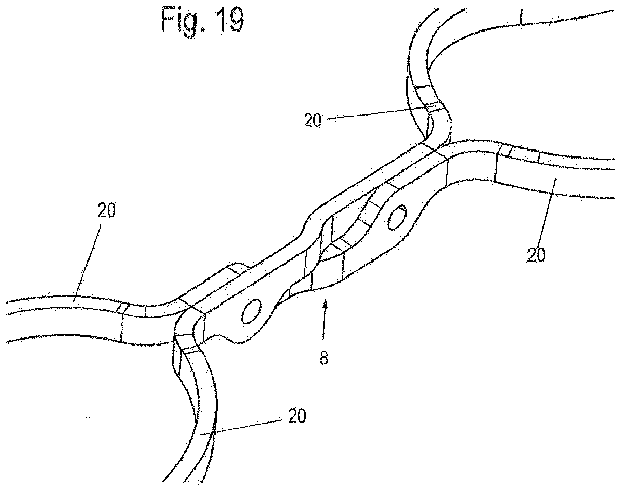

Die **Figur 19** zeigt den Mittenbereich eines weiteren Ausführungsbeispiels der Spreizeinrichtung 8, bei der die Federarme 20 aus zwei sich kreuzenden Einzelfedern gebildet sind, die im Mittenbereich fest miteinander verbunden sind. Dabei liegt ein Federarm 20 der einen Einzelfeder an einer Belagträgerplatte 4 und der andere Federarm dieser Einzelfeder an der anderen, gegenüberliegenden Belagträgerplatte 4 an, gleichermaßen die Federarme 20 der anderen Einzelfeder.

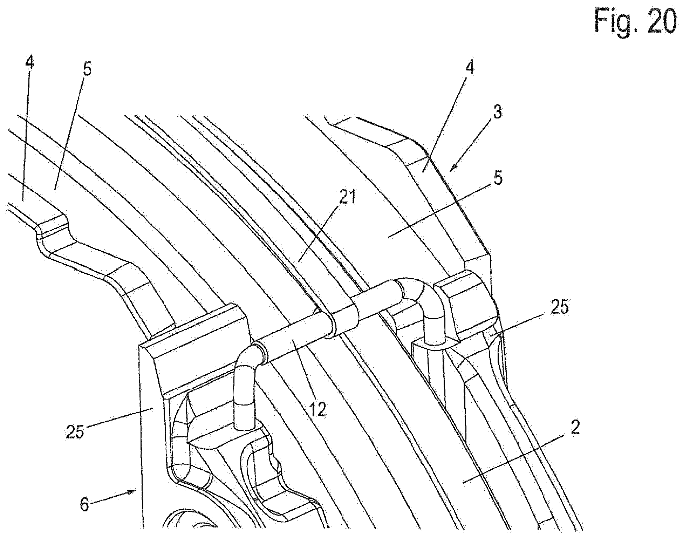

Eine der Figur 5 vergleichbare Befestigung des Bügels 12 ist in der **Figur 20** dargestellt. Allerdings wird hierbei auf die Sicherung 13 zur Halterung des Haltebogens 21 verzichtet. Stattdessen ist der Haltebogen 21 insbesondere durch Reibschluss, denkbar aber auch durch Formschluss, axial gesichert an dem Bügel 12 gehalten. Im Übrigen ist der Bügel 12 in Bohrungen 25a der sich gegenüberliegenden Bremsträgerhörner 25 eingesteckt.

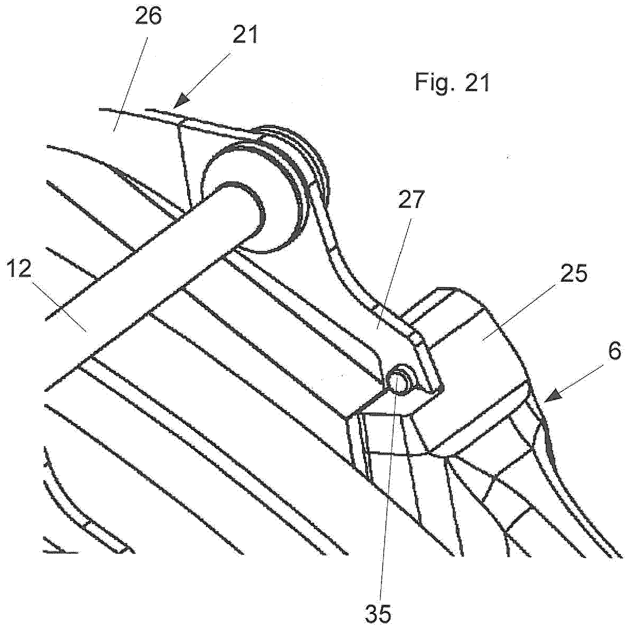

Eine davon verschiedene Konstruktion ist in der **Figur 21** erkennbar, die einen vergrößerten Ausschnitt einer Befestigung des Haltebogens 21 wiedergibt. Dabei ist der Bügel 12 als gestreckte Stange ausgebildet und endseitig an dem Haltebogen 21 befestigt, dessen Endschenkel 27 sich fluchtend an dem Mittelschenkel 26 anschließt, wobei der Endschenkel 27 ein gabelförmiges Ende aufweist, das einen Stift 35 übergreift, der in das Bremsträgerhorn 25 eingelassen ist.

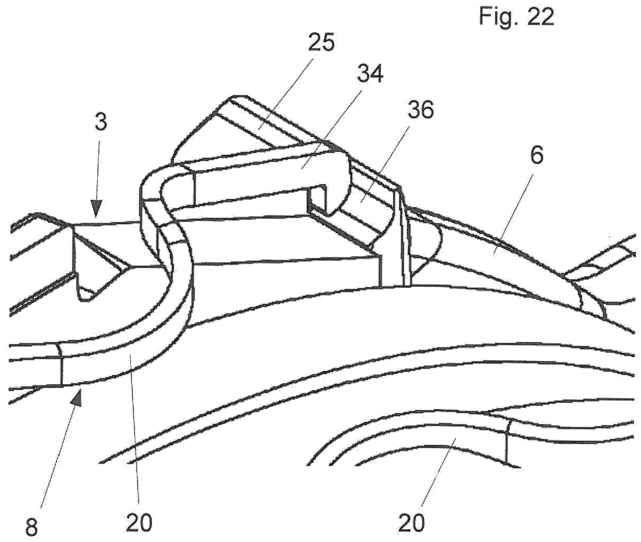

In der **Figur 22****,** gleichfalls ein vergrößerter Teilausschnitt im Bereich eines Bremsträgerhorns 25, ist zu erkennen, dass sich an einen Federarm 20 der Spreizeinrichtung 8 eine Stützlasche 34 anschließt, die an einer Stützfläche 36 des Bremsträgerhorns 25 anliegt und sich einerseits in radialer Richtung zur Bremsscheibe 2 und andererseits in axialer Richtung dazu abstützt.

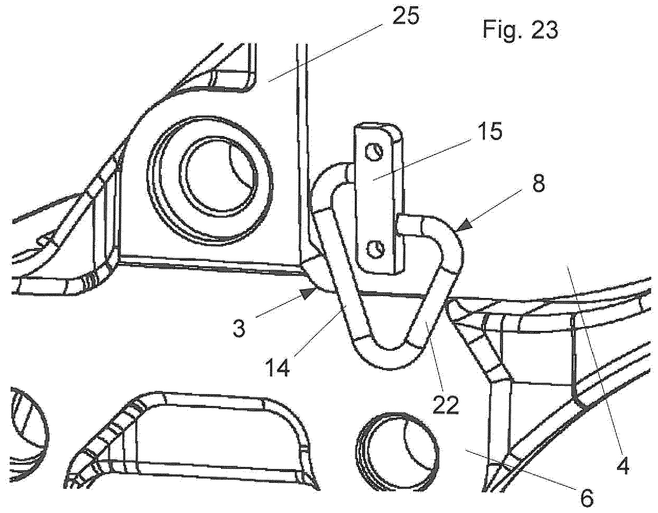

Vergleichbar der Ausführung nach Figur 2 ist in den Figuren **Figuren 23** **und** **24** jeweils eine Ausführungsvariante der Spreizeinrichtung 8 abgebildet, die aus einem Federbügel 14 und einem Anlageschenkel 22 besteht, die beide endseitig mit jeweils einem Befestigungsende 14a, 22a in die Aufhängung 15 eingesetzt ist, wobei diese an der Belagträgerplatte 4 befestigt ist.

Dabei sind der Federbügel 14 und der Anlageschenkel 22 versetzt zueinander und auf gegenüberliegenden Seiten an der Aufhängung 15 befestigt und stützen sich andererseits am Bremsträger 6 ab und zwar bei dem in der **Figur 23** gezeigten Beispiel unterhalb der Belagträgerplatte 4 und bei dem in der **Figur 24** gezeigten Beispiel am Bremsträgerhorn 25.

Die Aufhängung 15 ist als eine längliche, rechteckige Platte mit zwei Längsseiten 15a, 15b ausgebildet. Hier sind zwei diagonal gegenüberliegende Enden abgerundet. Das Befestigungsende 14a des Federbügels 14 ist auf der in der Figur 24 gezeigten oben liegenden, schmalen Längsseite 15a außermittig rechts mit der Aufhängung 15 verbunden, wohingegen das Befestigungsende 22a des Anlageschenkels 22 an der unten liegenden, anderen schmalen Längsseite 15b außermittig links mit der Aufhängung 15 verbunden ist.

Die anderen Enden des Federbügels 14 und des Anlageschenkels 22 laufen schräg aufeinander zu und sind durch einen Verbindungsbogen 220 fest verbunden.

Die Platte der Aufhängung 15 ist hier mit zwei Befestigungslöchern 15c zur Befestigung, z.B. mittels Schrauben oder Nieten, versehen.

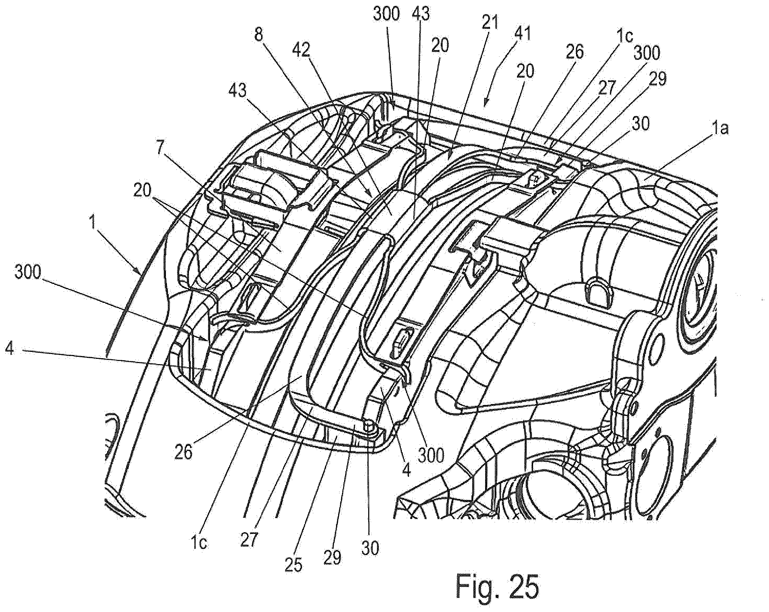

**Figur 25** zeigt ein weiteres Ausführungsbeispiel, welches ähnlich dem in den Figuren 8 bis 11 beschriebenen, jedoch mit einigen Unterschieden, aufgebaut ist.

Der Haltebogen 21 und die Federarme 20 sind hier einstückig, z.B. als ein Stanzbiegeteil, ausgebildet und in einem mittleren Bereich durch einen gemeinsamen Basisabschnitt 42 fest verbunden. Der Basisabschnitt 42 liegt in der virtuellen Mitte der Öffnung 41 und in einer Ebene, die tangential zu der Bremsscheibe 2 verläuft.

Von diesem Basisabschnitt 42 aus erstrecken sich die Mittelschenkel 26 des Haltebogens 21 nach beiden Seiten nach unten gebogen über der Bremsscheibe 2 wie in dem Ausführungsbeispiel nach Figur 4 gezeigt als flache Streifenabschnitte bis kurz vor die Zugstreben 1c, welche die Öffnung 41 seitlich begrenzen. An diesen Stellen sind beide Mittelschenkel 26 zu dem Zuspannabschnitt 1a des Bremssattels 1 hin umgebogen und gehen jeweils in einen Endschenkel 27 über.

Jeder Endschenkel 27 weist die Lasche 29 mit dem Zapfen 30 auf, ähnlich wie in dem Ausführungsbeispiel nach Figur 8, jedoch mit dem Unterschied, dass die Lasche 29 nicht verbreitert ist. Jeder Endschenkel 27 verläuft mit seiner Lasehe 29 derart in einer Ebene, dass die Lasche 29 auf dem zugehörigen Bremsträgerhorn 25 aufliegt. Dabei wird der Zapfen 30 in einer Bohrung 25a (ähnlich wie in Figur 26 gezeigt) aufgenommen und an dem Bremsträgerhorn 25 befestigt. Dies gilt natürlich für beide Seiten und für beide Bremsträgerhörner 25.

Ferner weist der Basisabschnitt 42 an seinen beiden Längsseiten jeweils einen um ca. 90° nach unten zur Bremsscheibe 2 hin umgebogenen Verbindungsabschnitt 43 auf. Jeder Verbindungsabschnitt 43 verbindet auf jeder Längsseite des Basisabschnitts 42 jeweils zwei Federarme 20 mit dem Basisabschnitt 42 parallel zu der gedachten Längsmittellinie der Öffnung 41 derart, dass sich eine Anordnung ähnlich wie in Figur 8 ergibt. Dabei liegt jeder Verbindungsabschnitt 43 in einer jeweiligen Ebene, die um etwa 90° zu der Ebene des Basisabschnitts 42 angeordnet ist und im Wesentlichen parallel zu der Ebene der Bremsscheibe 2 verläuft.

Die Federenden 300 der Federarme 20 sind wie in dem Ausführungsbeispiel nach Figur 8 und in der Figur 11 dargestellt und beschrieben ausgebildet. In **Figur 26** ist ein weiteres Ausführungsbeispiel dargestellt, bei welchem der Haltebogen 21 drahtförmig ausgebildet ist und z.B. einen kreisrunden Querschnitt aufweist.

Der Haltebogen 21 umfasst einen Zentralabschnitt 26a in einem mittleren Bereich der Öffnung 41. An den Zentralabschnitt 26a schließt auf jeder Seite ein Mittelabschnitt 26 an, der jeweils in einem Bogen in Richtung zu dem Zuspannabschnitt 1a hin durch einen Endschenkel 27 auf das jeweilige Bremsträgerhorn 25 zuläuft. Jeder Endschenkel 27 ist dann nach unten hin um ca. 90° in jeweils einen Befestigungsabschnitt 27a umgebogen. Jeder Befestigungsabschnitt 27a ist in einer Bohrung 25a eines jeden Bremsträgerhorns 25 des Belagschachtes des aktionsseitigen Bremsbelags 3 befestigt und bildet damit die Halterung des Haltebogens 21 mit der Spreizeinrichtung 8 in dem Bremsträger 6.

Die Federarme 20 sind hier nicht in Längsrichtung der Öffnung 41, sondern in Querrichtung der Öffnung 41 jeweils paarweise durch einen Verbindungsabschnitt 200 verbunden. Jeder Verbindungsabschnitt 200 ist in radialer Richtung auf die Bremsscheibendrehachse 2a nach unten hin verbreitert und weist eine Ausnehmung 201 auf. Jede Ausnehmung 201 kommuniziert mit der Außenkontur des Haltebogens 21 und weist hier einen halbkreisförmigen Querschnitt auf, der nach oben zur Aufnahme des Haltebogens 21 offen ist. Die Verbindungsabschnitt 200 der so paarweise angeordneten Federarme 20 sind in einem Abstand 203 an dem Zentralabschnitt 26a des Haltebogens 21 angeordnet, wobei die Mitte des Zentralabschnitts 26a der virtuellen Mitte der Öffnung 41 zugeordnet ist und die Mitte des Abstands 203 bildet. Ein Maß des Abstands 203 entspricht hier etwa einem Viertel der Längsausdehnung der Öffnung 41. Das Maß des Abstands 203 kann beispielsweise in einem Bereich von 30 bis 50% der Längenausdehnung der Öffnung 41 entweder symmetrisch zu der virtuellen Mitte der Öffnung 41 oder ohne Bezug auf die virtuelle Mitte der Öffnung 41 liegen. Die Federarme 20 können mit dem Haltebogen 21 z.B. durch Schweißen, Verpressen oder beides verbunden sein.

Die Federarme 20 und ihre Verbindungsabschnitte 200 sind z.B. einstückig als Stanzbiegeteile aus Bandfederstahl ausgebildet.

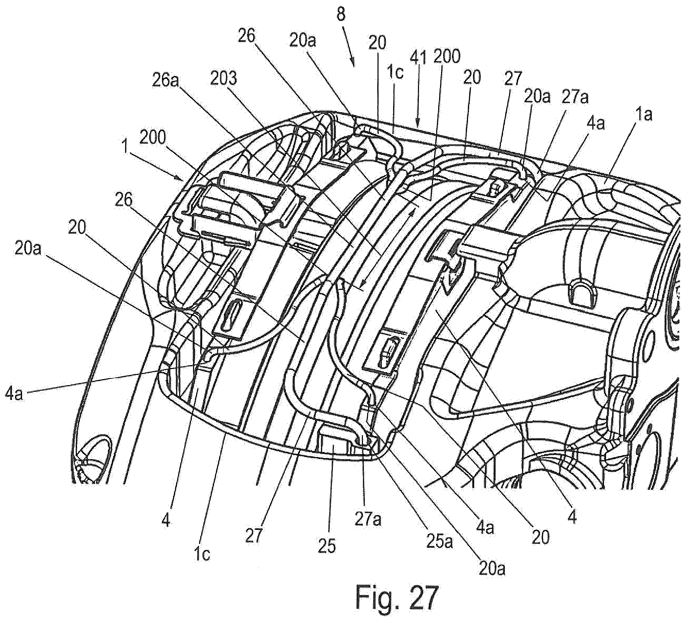

In dem Ausführungsbeispiel der **Figur 27** ist der Haltebogen 21 wie in der Ausführung nach Figur 26 gestaltet. Hier sind jedoch die paarweise in Querrichtung der Öffnung 41 angeordneten Federarme 20 einschließlich ihrer Verbindungsabschnitte 200 drahtförmig ausgebildet. Die Verbindungsabschnitte 200 sind so gebogen, dass sie Aufnahmen für den Haltebogen 21 bilden. Nach oben hin sind die Federarme 20 jeweils durch den Haltebogen 21 fixiert, der wiederum durch den Belaghaltebügel 28 nach unten gedrückt wird. Mit steigendem Belagverschleiß bewegen sich die Verbindungsabschnitte 200 in Richtung Mitte aufeinander zu.

Die Enden der Federarme 20 sind jeweils als ein nach unten gebogener Befestigungsabschnitt 20a ausgebildet. Jeder Befestigungsabschnitt 20a ist in einem Aufnahmeloch 4a an einem jeden Endbereich einer Belagträgerplatte 4 von der Oberseite her aufgenommen. Die Spreizeinrichtung 8 überträgt ihre Spreizkräfte auf diese Weise zwischen jedem Befestigungsabschnitt 20a in dem zugehörigen Aufnahmeloch 4a auf die jeweiligen Belagträgerplatten 4.

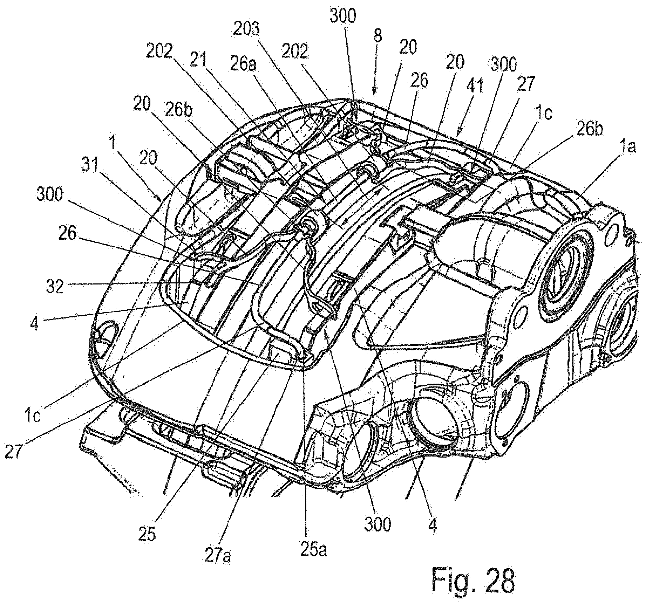

**Figur 28** zeigt ein Ausführungsbeispiel, bei welchem der Haltebogen 21 wie in den Ausführungen nach Figur 26 und 27 C-förmig ausgebildet ist. Die Federarme 20 weisen Federenden 300 gemäß Figur 11 auf. Zudem sind die Federarme 20 paarweise in Querrichtung der Öffnung 41 angeordnet. Jedes Paar von Federarmen 20 ist an deren anderen Enden durch einen jeweiligen Haubenverbinder 202 verbunden.

Jeder Haubenverbinder 202 weist eine nach unten zur Bremsscheibe 2 hin weisende Aufnahmeöffnung in Längsrichtung des Zentralabschnitts 26a des Haltebogens 21 auf, die mit der Außenkontur des Zentralabschnitts 26a des Haltebogens 21 kommuniziert.

Die paarweise mit jeweils einem Haubenverbinder 202 verbundenen Federarme 20 sind mit ihrem jeweiligen Haubenverbinder 202 auf den Zentralabschnitt 26a angeordnet. Um die beiden Federarme 20 bzw. Spreizelemente auf dem Haltebogen 21 zu fixieren, sind jeweils zwei Schellen eingebracht, die aus Halbschalen bestehen und versetzt zueinander die Spreizelemente mit dem Haltebogen 21 verklemmen. Um den Abstand 203 zu gewährleisten, sind zusätzlich noch Schweißpunkte zwischen den Bauteilen gesetzt. Zusätzlich dienen Schellen als Abstandshalter zwischen dem Haltebogen 21 und Federarmen 20. Dieser ist in der Ausführung nach Figur 28 erforderlich, da der gehärtete Federarm 20 nicht mit so einem kleinen Radius auf den Haltebogen 21 gelegt werden kann.

**Figur 29** zeigt eine Scheibenbremse 100 in einer perspektivischen Darstellung mit der Bremsscheibe 2 und der Bremsscheibendrehachse 2a.

Ein Drehpfeil um die Bremsscheibendrehachse 2a deutet eine Hauptdrehrichtung für Vorwärtsfahrt eines Fahrzeugs, dem die Scheibenbremse 100 zugeordnet ist, an. In Bezug auf die Hauptdrehrichtung der Bremsscheibe 2 sind an der Scheibenbremse 100 eine Einlaufseite ES und gegenüberliegend eine Auslaufseite AS festgelegt. Dementsprechend werden die Bremsträgerhörner 25 an der Einlaufseite ES einlaufseitige Bremsträgerhörner 25 und an der Auslaufseite AS auslaufseitige Bremsträgerhörner 25 genannt.

In diesem Ausführungsbeispiel ist die Spreizeinrichtung 8 im Wesentlichen wie die Spreizeinrichtung 8 des Ausführungsbeispiels nach Figur 28 aufgebaut. Ein Unterschied zu dem Ausführungsbeispiel nach Figur 28 besteht jedoch darin, dass in Figur 29 die Haubenverbinder 202 auf beiden Seiten des Haltebogens 21 durch jeweils einen Längsverbinder 202a verbunden sind. Zudem weist die Ausführung keine zusätzlichen Schellen auf. Die Spreizeinrichtung 8 besteht im Gegensatz zu Figur 28 aus einem Teil mit vier Federarmen 20.

In bevorzugten Ausführungen entspricht eine Länge der Federarme 20 zusammen genommen in Längsrichtung der Öffnung 41 in etwa 60 bis 95 % einer Belagschachtlänge, insbesondere bevorzugt 70 bis 80 % einer Belagschachtlänge. Unter der Belagschachtlänge ist der Abstand der zugehörigen Bremsträgerhörner 25 zu verstehen.

Die Spreizeinrichtung 8 besteht aus zwei Spreizelementen, die in Längsrichtung miteinander verbunden sind. Die beiden Spreizelemente sind mittig (in Bezug auf die Bremsträgerhörner 25) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslaufseite AS und Einlaufseite ES, die zu Schrägverschleiß führen können, werden durch das einseitige Angreifen je eines Federarms 20 pro Bremsbelag minimiert. Der mittlere Steg zwischen den beiden Spreizelementen kann durch eine Schweißnaht mit dem Haltebogen 21 verbunden werden.

Eine gleichmäßige Kraftaufbringung der Federarme 20 aktionsseitig und reaktionsseitig, bzw. auf der Seite des Zuspannabschnitts 1a (Druckstückseite) und der Seite des Sattelrückens 1b (Sattelseite), kann durch eine flexible Einstellung des Mittelstegs, d.h. des Haltebogens 21, realisiert werden. Weiterhin können durch den flexiblen Mittelsteg geringe geometrische Fehlstellungen von Bremsscheibe 2, Reibbelag 5 und Belagträgerplatte 4 ausgeglichen werden.

Durch den Mittelsteg kann die Spreizeinrichtung 8 als eine aktive Rückstelleinrichtung (ACR) leicht positioniert und durch den Belaghaltebügel 28 niedergehalten werden. Vorteilhaft kann bei einem Belagwechsel die Spreizeinrichtung 8 problemlos entnommen und mitgetauscht werden.

Durch die Ausnutzung der gesamten Belagschachtlänge zwischen den Bremsträgerhörnern 25 können Spreizelemente beziehungsweise Federarme 20 mit einer sehr geringen Federrate genutzt werden, um bei Belagverschleiß im Wesentlichen konstante Kräfte aufzubringen. Durch die langen Federwege können die Federarme 20 tolerant in Bezug auf Federkräfte sein. Die Federwege führen zu einer konstanten Federrate mit geringen Toleranzen

In einer Ausführungsvariante können lediglich zwei Federn verwendet werden.

Die Spreizelemente, d.h. die Federarme 20, können aus kostengünstigen und geometrisch flexiblen Blechen gebildet werden.

Durch den Versatz mit unterschiedlichen Drehpunkten kann eine niedrigere Federrate abgebildet werden (siehe Figur 2, 23 und 24). Vorteilhaft ist nur eine geringe Windungszahl nötig.

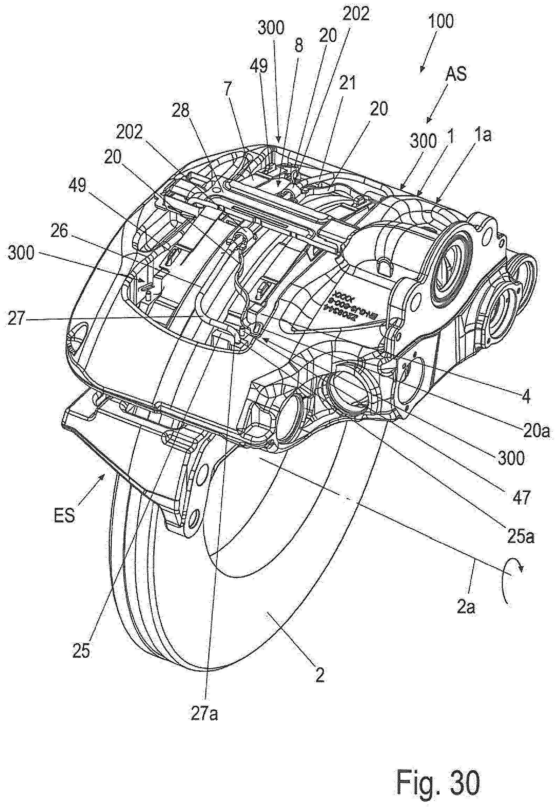

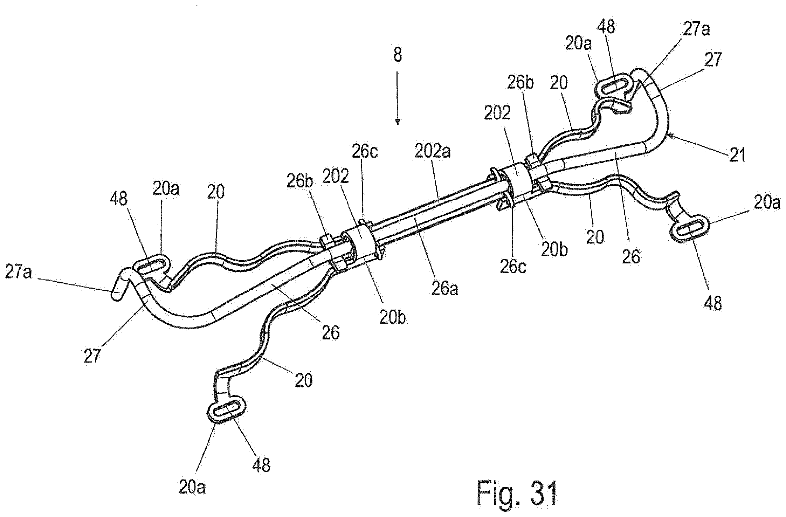

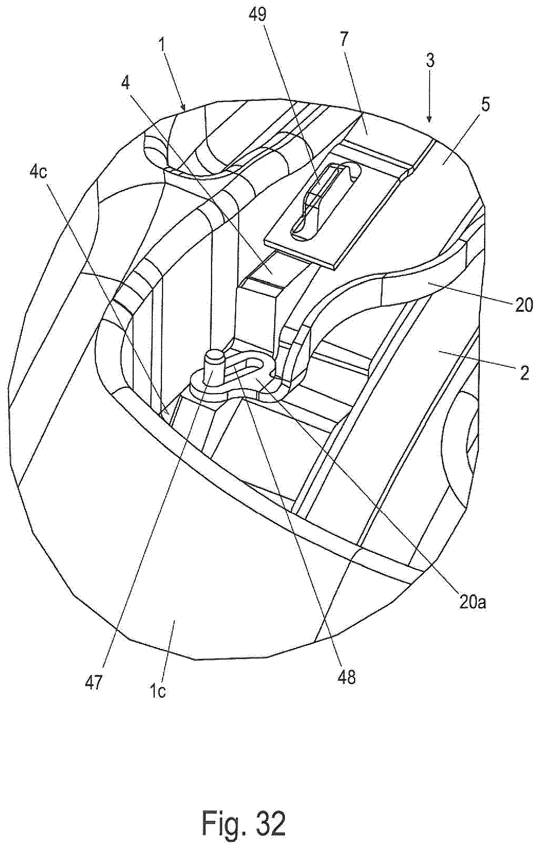

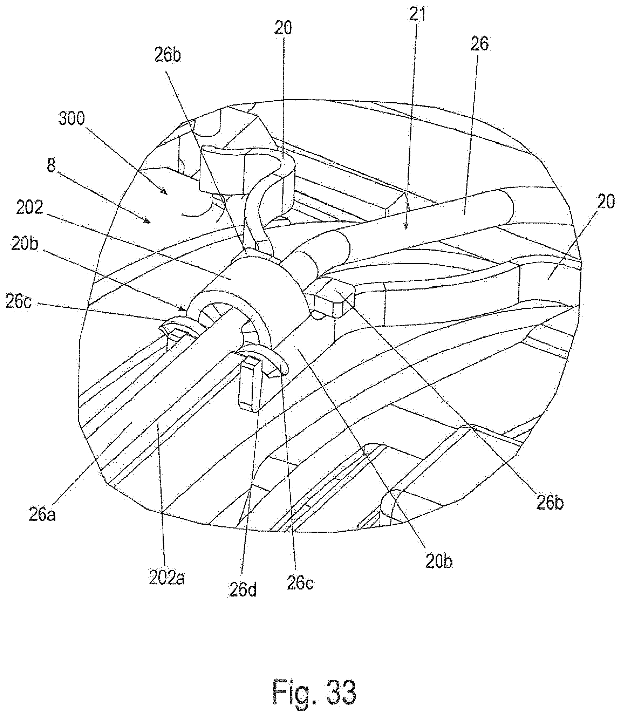

In **Figur 30** ist eine perspektivische Ansicht eines noch weiteren Ausführungsbeispiels der Scheibenbremse 100 gezeigt. **Figur 31** zeigt eine perspektivische Ansicht der Spreizeinrichtung 8 des Ausführungsbeispiels der Scheibenbremse 100 nach Figur 30. Vergrößerte Detaildarstellungen der Spreizeinrichtung 8 nach Figur 31 sind in den **Figuren 32** **und** **33** dargestellt.

Dieses weitere Ausführungsbeispiel ist ähnlich wie das Ausführungsbeispiel der Scheibenbremse 100 nach Figur 28 und 29 aufgebaut. Es sollen daher nur die Unterschiede erläutert werden.

Die Spreizeinrichtung 8 ist hier mit länglichen Befestigungsabschnitten 20a an den Federenden 300 der Federarme 20 versehen. Diese Befestigungsabschnitte 20a sind in ihrer jeweiligen Längsrichtung mit einem Langloch 48 ausgebildet, welches als ein Führungsabschnitt für die Federenden 300 der Spreizeinrichtung 8 dient.
Die Befestigungsabschnitte 20a stehen mit ihren Langlöchern 48 im zusammengebauten Zustand der Scheibenbremse 100 jeweils mit einem Stift 47 in Zusammenwirkung, wie z.B. in Figur 32 deutlich zu erkennen ist. Dabei weist die Außenfläche des Stiftes 47 eine Anlagefläche der Belagträgerplatte 4 auf. An jedem Ende einer Belagträgerplatte 4 ist ein Stift 47 fest mit der Belagträgerplatte 4 verbunden, z.B. in eine Bohrung eingesetzt. Dabei erstreckt sich ein von der Belagträgerplatte 4 hervorstehendes Ende des Stiftes 47 durch das zugehörige Langloch 48 des jeweiligen Federendes 300 der Spreizeinrichtung 8. Mittelachsen der Stifte 47 verlaufen zueinander parallel und senkrecht zu der Bremsscheibendrehachse 2a. Die Langlöcher 48 ermöglichen Relativbewegungen zwischen den Federarmen 20 der Spreizeinrichtung 8 und den Bremsbelägen 3, die sich in Richtung der Bremsscheibendrehachse 2a verschieben. Die Federkräfte der Federarme 20 ermöglicht es, die Bremsbeläge 3 nach einer Bremsung von der Bremsscheibe 2 zu lösen und zurückzustellen, wie bereits oben beschrieben. Die Bohrung für den Stift 47 ist wiederum sehr genau zur Mitte der Bremsscheibe 2 angeordnet. Dazu gelten auch die obigen Bemerkungen zur Toleranz im Zusammenhang mit Figur 13a.

Die Befestigungsabschnitte 20a liegen dabei jeweils auf einer Auflagefläche 4c der jeweiligen Belagträgerplatte 4 auf. Die Auflageflächen 4c verlaufen tangential zu der Bremsscheibe 2 und liegen je Bremsbelag 3 in einer Ebene.

Die Ausbildung der Spreizeinrichtung 8 ist in Figur 31 dargestellt.

Die Spreizeinrichtung 8 umfasst zwei Spreizelemente mit jeweils zwei Federarmen 20, eine Schelle und den Haltebogen 21.

Die Haubenverbinder 202 sind beidseitig jeweils mit einem Verbindungsabschnitt 20b, der jeweils eine Verlängerung der Federarme 20 bildet, verbunden und in einer Art Hülsenform um den Zentralabschnitt 26a des Haltebogens 21 umgebogen. Auf diese Weise ist jeder Haubenverbinder 202 zusammen mit den zwei zugehörigen Federarmen 20 auf dem Zentralabschnitt 26a des Haltebogens 21 drehbar gelagert, wobei die Federarme 20 durch den Haubenverbinder 202 miteinander verbunden sind.

Die Schelle hat einen Mittelsteg, der hier als Längsverbinder 202a bezeichnet ist, vier Umlegelaschen als Sicherungselemente 26c und vier Niederhalter als Verbreiterungen 26b, welche die Federarme 20 auf die Belagträgerplatten 4 drücken sollen.
Die Verbreiterungen 26b liegen jeweils beiderseits an dem Übergang des Zentralabschnitts 26a zum Mittelschenkel 26 des Haltebogens 21 auf den Verbindungsabschnitten 20b der Federarme 20 auf. Auf diese Weise verhindern die Verbreiterungen 26b ein Abheben der Haubenverbinder 202 von dem Zentralabschnitt 26a. Gleichzeitig bilden die Verbreiterungen 26b einen axialen Anschlag für die Haubenverbinder 202 mit den daran befestigten Federarmen 20 in Richtung der Längsachse des Zentralabschnitts 26a nach außen hin, d.h. jeweils von der Mitte der Öffnung 41 nach außen hin auf die Zugstreben 1c hin (siehe Figur 30 und 33).

Die jeweiligen zwei Verbindungsabschnitte 20b der Federarme 20 weisen mit ihren freien Enden zur Mitte der Öffnung 41 und sind jeweils mit dem Sicherungselement 26c in ihren Endbereichen verbunden. Das Sicherungselement 26c besteht jeweils aus zwei Umlegelaschen, die jeweils mit einem Ende in einer Nut 26d in jeweils einem Endbereich der Verbindungsabschnitte 20b festgelegt sind. Die Sicherungselemente 26c bilden auf diese Weise eine weitere Sicherung des Haubenverbinders 202 gegen Lösen von dem Zentralabschnitt 26a.

Im Gegensatz zu der Ausführung nach Figur 30 ist hier nur eine Schelle anstelle von vier Schellen erforderlich Das Verspannen der Spreizelemente wird durch die Umlegelaschen als Sicherungselemente 26c der Schelle sichergestellt, die bei der Montage umgelegt werden und in die Nut 26d greifen. So sichert man das Spreizelement, damit es nicht in Richtung Mitte rutscht und auf die Belagträgerplatte 4 kippt.

Dadurch, dass der Mittelsteg (Längsverbinder 202a) der Schelle außerdem durchgehend ist, kann die Schelle auch nicht mehr axial auf dem Haltebogen 21 rutschen. Daher kann auf Schweißnähte oder weitere Fixierungen verzichtet werden. Zusätzlich dient die Schelle auch wieder als Abstandhalter (siehe Figur 28).

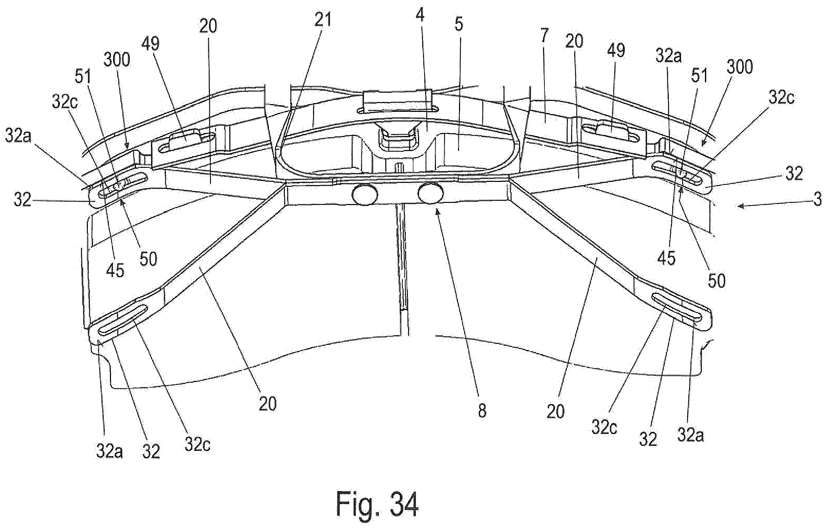

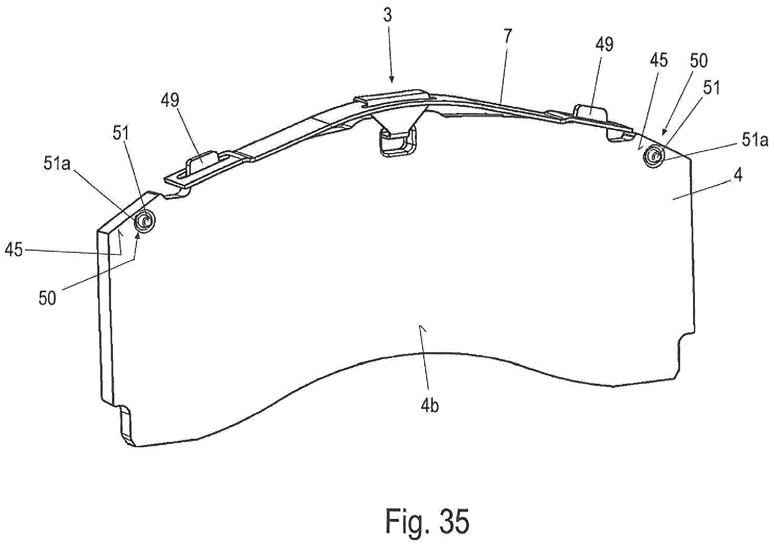

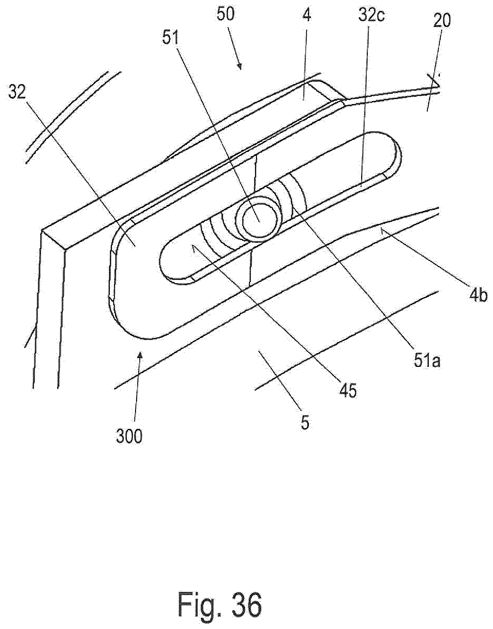

**Figur 34** zeigt eine perspektivische Ansicht einer weiteren Spreizeinrichtung 8. In **Figur 35** ist eine dazu gehörige Belagträgerplatte 4 in Ansicht ihrer Belagseite 4b gezeigt. **Figur 36** stellt eine vergrößerte Ansicht eines Andruckschenkels 32 mit einer Kontur 50 dar.

Die Ausführung der weiteren Spreizeinrichtung 8 ist ähnlich der Ausführung nach Figur 5 und Figur 13. Im Unterschied dazu weisen hier die Federenden 300 der Federarme 20 jeweils einen Andruckschenkel 32 mit einer Führungsöffnung 32c auf. Die Führungsöffnungen 32c stehen in jeweiliger Zusammenwirkung mit einer Kontur 50, die hier als ein zylinderförmiger Vorsprung in Form eines Zapfens 51 ausgebildet ist.

Die Kontur 50 wird auch als Störkontur bezeichnet und ist z.B. als Zapfen 51 an die Belagseite 4b der Belagträgerplatte 4 angegossen. Benötigte Gießradien 51a können hierbei versetzt in die Belagträgerplatte 4 verlaufen. Der Zapfen 51 steht von der Belagseite 4b in Richtung der Bremsscheibendrehachse 2a hervor. An jeder Ecke, d.h. zwischen einem Vorsprung 49 zur Halterung der Belaghaltefeder 7 und einer Seitenkante, ist jeweils ein Zapfen 51 vorgesehen. Um jeden Zapfen 51 herum ist die Anlagefläche 45 angeordnet.

Die Andruckschenkel 32 werden mit ihren Führungsabschnitten 32c bei der Montage über der jeweiligen Störkontur 50 montiert. Dabei erstreckt sich jeder Zapfen 51 durch den zugehörigen Führungsabschnitt 32c des Andruckschenkels 32. Die Andruckschenkel 32 stehen über ihre Anlageabschnitte 32a mit der jeweiligen Anlagefläche 45 der Belagträgerplatte 4 in Kontakt.

Auf diese Weise kann bei Betätigung der Scheibenbremse 100 jeder Führungsabschnitt 32c mit dem Andruckabschnitt 32 seitlich zum Zapfen 51 wandern, wobei die Führungsabschnitte 32c so jeden Federarm 20 in radialer Richtung führen. In radialer Richtung wird jedoch über Formschluss in beiden radialen Richtungen ein Verrutschen der Federarme 20 verhindert. So können Vibrationen und andere Störeinflüsse die Funktion des Systems nicht beeinträchtigen.

Die Führungsabschnitte 32c sind als Langlöcher ausgebildet, wobei die Langlöcher bevorzugt in Evolventenform ausgeführt sind.

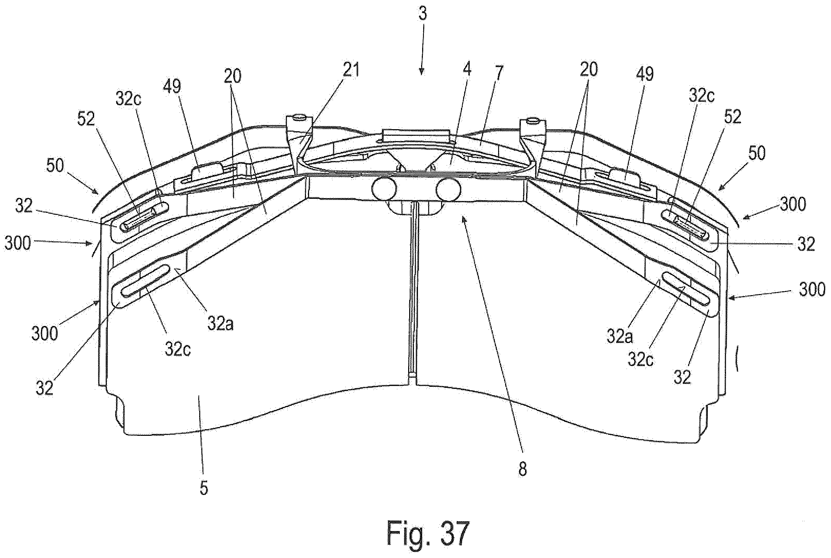

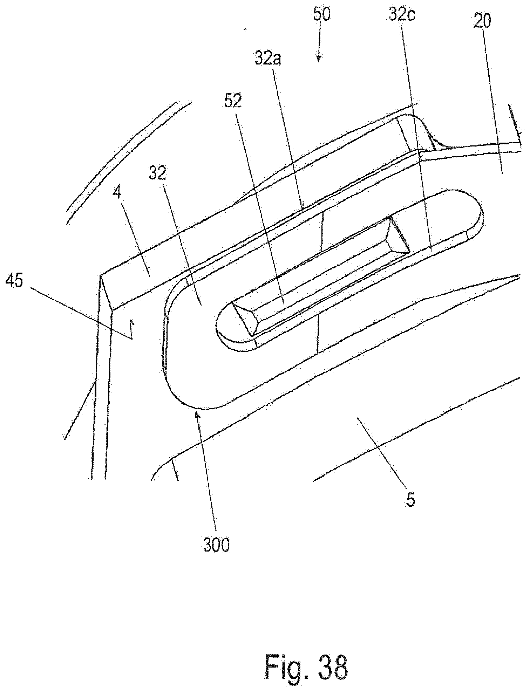

Die Ausführung der Kontur 50 kann auch andere Formen als Störkontur aufweisen. So zeigt **Figur 37** zeigt eine perspektivische Ansicht einer Variante der Spreizeinrichtung 8 nach Figur 34. In **Figur 38** ist eine vergrößerte Ansicht des Andruckschenkels 32 mit der Kontur 50 gezeigt, die in dieser Variante als ein prismatischer Vorsprung 52 mit einer rechteckigen Grundfläche ausgebildet ist.

Die Kontur 50 ist nach den Figuren 34 bis 38 in einer axialen Richtung ausgeführt, d.h. die Kontur 50 steht von der Belagträgerplatte 4 in einer Richtung parallel zu der Bremsscheibendrehachse 2a hervor. Es ist auch möglich, dass die Kontur 50 als Störkontur in radialer und/oder tangentialer Richtung in Bezug auf die Bremsscheibe 2 bzw. auf deren Bremsscheibendrehachse 2a vorgesehen ist.

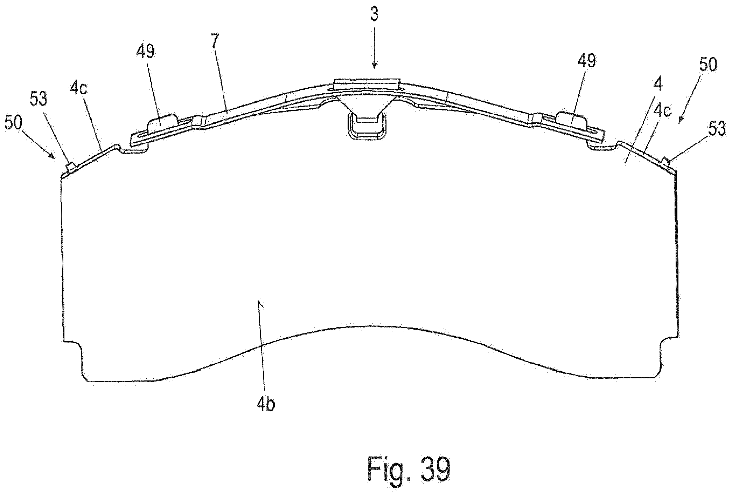

**Figur 39** zeigt Konturen 50 als Störkonturen in radialer Richtung ausgeführt. Hier sind Vorsprünge 53 an jeder oberen Ecken der Belagträgerplatte 4 auf jeweils einer schrägen Auflagefläche 4c der Oberseite der Belagträgerplatte 4 angeformt.

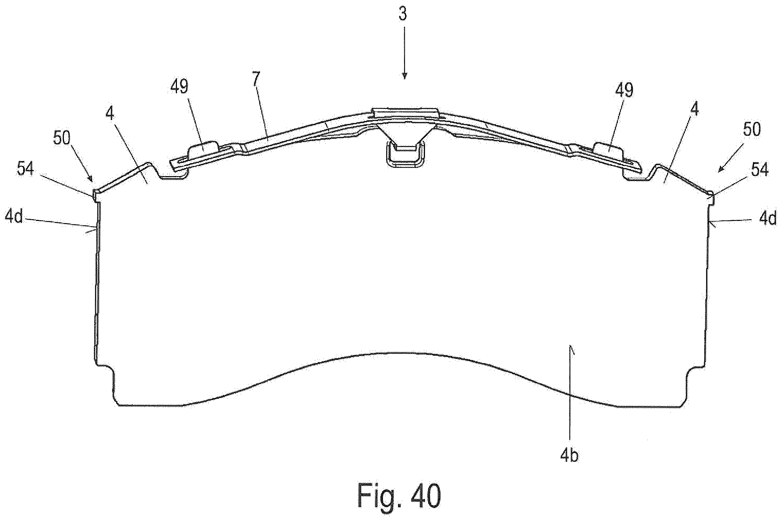

In **Figur 40** sind Konturen 50 in tangentialer Richtung dargestellt. Ebenfalls sind hierbei Vorsprünge 54 an jeder oberen Ecke jedoch jeweils an einer Seitenfläche 4d angeformt.

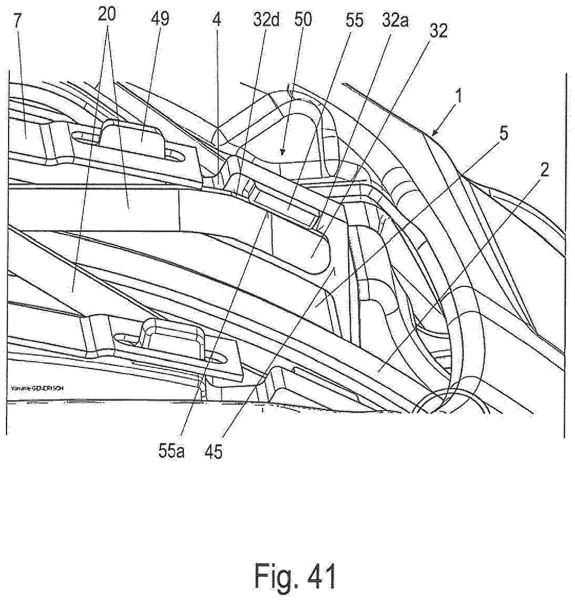

Eine weitere Variante zeigt **Figur 41****.** In dieser Variante ist eine Kontur 50 als ein quaderförmiger Führungsvorsprung 55 unterhalb einer oberen Kante eines Eckbereichs der Belagträgerplatte 4 auf deren Belagseite 4b angebracht. Eine untere Seite des Führungsvorsprungs 55 steht als Führungsfläche 55a in Kontakt mit einer oberen Fläche eines zweiten Anlageabschnitts 32d des Andruckschenkels 32. Die Führungsfläche 55a verläuft etwa rechtwinklig zu der der Anlagefläche 45 der Belagträgerplatte 4. Der Andruckschenkel 32 weist hier keine Führungsöffnung 32c auf, steht aber mit seinem ersten Anlageabschnitt 32a (siehe auch Figur 13) mit der Anlagefläche 45 in Kontakt. Dieses ist ein Kontakt in axialer Richtung, wohingegen der Anlageabschnitt 32d durch den Führungsvorsprung 55 in radialer Richtung festgelegt ist. Der erste Anlageabschnitt 32a liegt rechtwinklig zu dem zweiten Anlageabschnitt 32d, welcher in einfacher Weise durch die obere Seitenfläche des Andruckschenkels 32 gebildet ist. Der Anlageabschnitt 32d kann sich so relativ zu dem Führungsabschnitt in seitlicher Richtung bewegen.

Außerdem kann die Kontur 50 in jeglicher Form, als auch versenkt oder erhaben ausgeführt werden. Bei versenkter Kontur 50 wird dementsprechend der Andruckschenkel 32 des Federarms 50 mit einer passenden Führungskontur des Führungsabschnitts 32c ausgeführt. Die Anzahl der vorgesehenen Konturen 50 kann je nach Ausführung variieren.

Die Kontur 50 kann auch eine Belagkodierung bilden. Beispielsweise kann der zuspannseitige Bremsbelag 3 die Zapfen 51 als Kontur 50 aufweisen, wobei der rückenseitige Bremsbelag 3 die prismatischen Vorsprünge 52 aufweist.

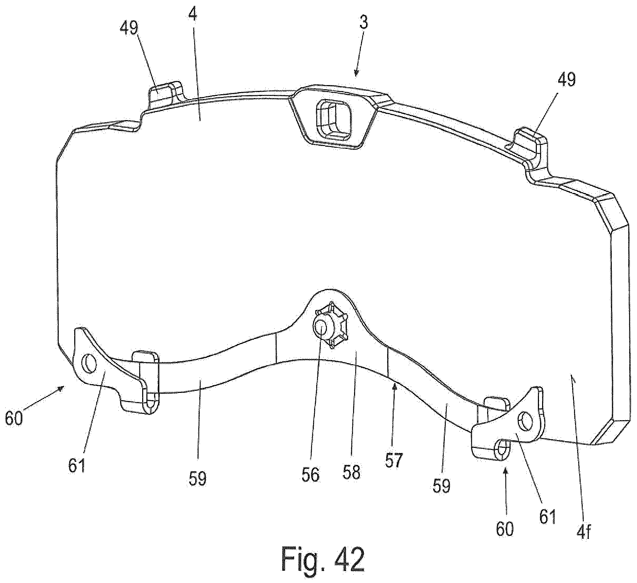

In den Figuren 42-44 sind Ansichten eines noch weiteren Ausführungsbeispiels der Scheibenbremse 300 mit einer Spreizeinrichtung mit zusätzlichen Rückstellelementen.

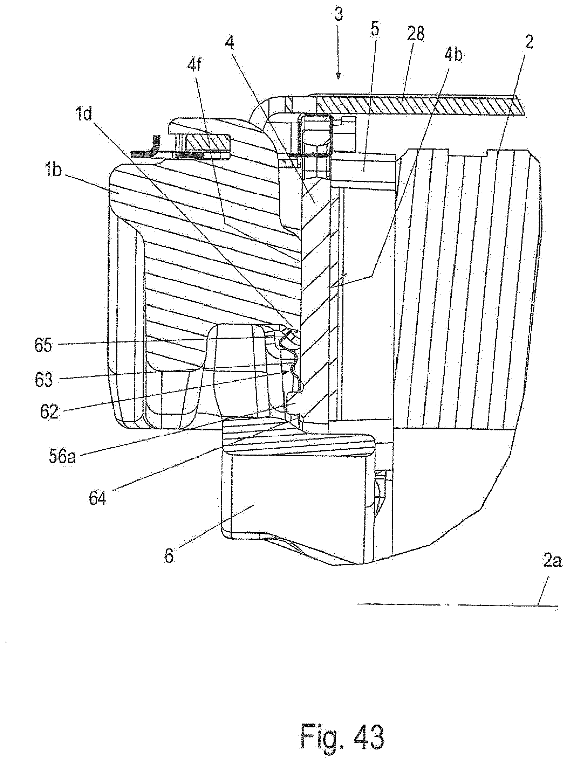

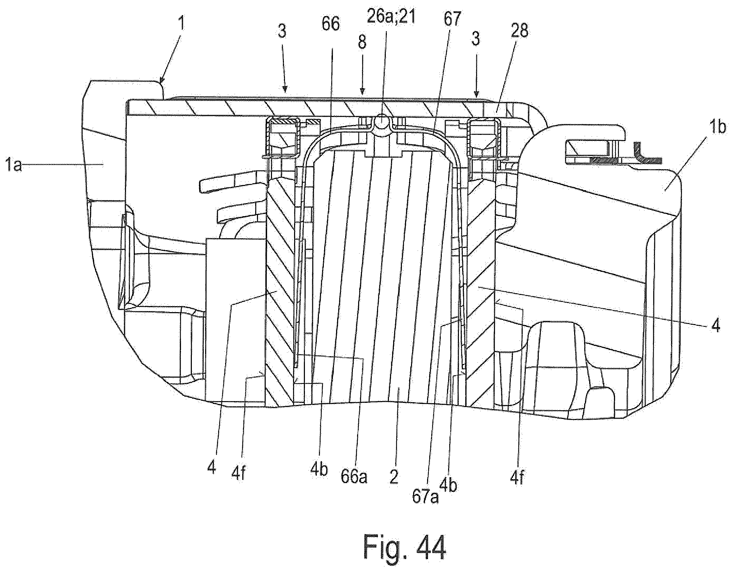

**Figur 42** zeigt eine perspektivische Ansicht einer Druckseite 4f der Belagträgerplatte 4 des zuspannseitigen bzw. inneren Bremsbelags 3 mit einem Rückstellelement 57. **Figur 43** stellt eine Schnittansicht in einer durch die Bremsscheibendrehachse 2a verlaufenden Ebene der Scheibenbremse mit dem rückenseitigen bzw. äußeren Bremsbelag 3 mit einem weiteren Rückstellelement 62 dar. In **Figur 44** ist eine Variante der Spreizeinrichtung 8 mit angebrachten Rückstellelementen 66, 67 in einer Schnittansicht in einer durch die Bremsscheibendrehachse 2a verlaufenden Ebene der Scheibenbremse mit den Bremsbelägen 3 dargestellt.

Die Druckseite 4f der Belagträgerplatte 4 ist die Seite der Belagträgerplatte 4, welche keinen Reibbelag 5 trägt und entweder mit der Zuspanneinrichtung oder mit dem Sattelrücken 1b in Kontakt steht.

Die Rückstellelemente 57, 62; 66, 67 bewirken jeweils eine Unterstützung der Rückstellung der Bremsbeläge 3 von der Bremsscheibe 2 nach einem Bremsvorgang. Dabei greifen die Rückstellelemente 57, 62; 66, 67 mit einem Abschnitt in einem unteren Bereich an der jeweiligen Belagträgerplatte 4 zusätzlich zu dem Angriffspunkt/den Angriffspunkten an der Oberseite der Federarme 20 an, wobei sie mit einem anderen Abschnitt an einem zu ihnen relativ ortsfesten Abschnitt, z.B. Bremssattel 1 oder/und Bremsträger verbunden sind.

Dazu ist das Rückstellelement 57 in der Ausführung nach Figur 42 mit einem Abschnitt in einem unteren Bereich der Belagträgerplatte 4 auf deren Druckseite 4f an einem Halteabschnitt 56, der hier als ein Pin oder zapfenförmiger Vorsprung ausgebildet ist, befestigt. Zudem ist das Rückstellelement 57 mit einem weiteren Abschnitt in einem unteren Bereich der Bodenplatte 1e (siehe Figur 29) des Zuspannabschnitts 1a des Bremssattels 1 angebracht.

Das Rückstellelement 57 ist hier ein Federelement mit einem Zentralabschnitt 58, zwei Federarmen 59, zwei Befestigungsabschnitten 60 mit jeweils einer U-förmigen Lasche 61. Der Zentralabschnitt 58 ist mittig mit dem Halteabschnitt 56 über eine Klemm-/Krallverbindung verbunden. An jeder Seite geht der Zentralabschnitt 58 symmetrisch in den jeweiligen Federarm 59 über. Jeder Federarm 59 erstreckt sich von dem Zentralabschnitt 58 nach links und rechts in einem unteren Bereich der Belagträgerplatte 4 entlang und ist entsprechend ihrer Kontur geformt. Die Enden jedes Federarms 59 sind jeweils mit dem Befestigungsabschnitt 60 verbunden. Jeder Befestigungsabschnitt 60 ist geformt, dass die Bögen der U-Formen untereinander fluchten und in tangentialer Richtung zur Bremsscheibendrehachse 2a liegen. Der jeweils zur Bodenplatte 1e weisende Schenkel der Befestigungsabschnitte 60 verläuft nach außen hin als Lasche 61 und erweitert sich so, dass er jeweils eine Befestigungsbohrung zur Fixierung durch schon vorhandene Schrauben der Bodenplatte 1e an derselben aufweist.

Der rückenseitige Bremsbelag 3 ist mit dem weiteren Rückstellelement 62 wie Figur 43 zeigt versehen.

Das weitere Rückstellelement 62 ist als eine Art Blattfeder mit einem Federkörper 63 mit jeweils einem Federende 64, 65 ausgebildet. Das eine Federende 64 ist in einem unteren Bereich der äußeren Belagträgerplatte 4 auf deren Druckseite 4b an einem Halteabschnitt 56a, z.B. eine Öse, angelenkt. Das andere Federende 65 krallt sich in geeigneter Ausgestaltung an einem Befestigungsabschnitt 1d des Sattelrückens 1b des Bremssattels 1 fest.

Auf diese Weise üben die Rückstellelemente 57, 62 jeweils eine Zugkraft in Richtung der Bremsscheibendrehachse 2a von der Bremsscheibe 2 weg weisend aus, wodurch die Bremsbeläge 3 nach jedem Bremsvorgang durch die Rückstellelemente 57, 62 zusätzlich zu den Federarmen 20 der Spreizeinrichtung 8 im unteren Bereich für eine Rückstellung mit einer Kraft beaufschlagt werden.

In der Ausführung nach Figur 44 sind zwei sich gegenüberliegende Rückstellelemente 66, 67 in Federform, z.B. Blatt- oder/und Drahtfeder, jeweils mit einem Ende an dem Zentralabschnitt 26a des Haltebogens 21 der Spreizeinrichtung 8 befestigt. Von diesem Befestigungspunkt aus erstreckt sich jedes Rückstellelement 66, 67 in einem Bogen nach unten in Richtung auf die Bremsscheibendrehachse 2a bis in den Bereich eines unteren Bereiches eines jeden Bremsbelags 3 zu. Jedes Rückstellelement 66, 67 weist ein freies Ende mit jeweils einem Andruckschenkel 66a, 67a auf und ist jeweils in einem länglichen Zwischenraum zwischen Reibbelag 5 und der Belagseite 4b der Belagträgerplatte 4 angeordnet, wobei die Andruckschenkel 66a, 67a jeweils mit der jeweiligen Belagträgerplatte 4 in Kontakt stehen. In dieser Ausführung üben die Rückstellelemente 66, 67 jeweils eine Druckkraft in Richtung der Bremsscheibendrehachse 2a von der Bremsscheibe 2 weg weisend aus, wodurch die Bremsbeläge 3 nach jedem Bremsvorgang durch die Rückstellelemente 66, 67 zusätzlich zu den Federarmen 20 der Spreizeinrichtung 8 im unteren Bereich für eine Rückstellung mit einer Kraft beaufschlagt werden.

Es ist auch möglich, dass die Rückstellelemente 57, 62; 66, 67 z.B. an dem Belaghaltebügel 28 oder/und dessen Anbringungsabschnitten angebracht sind.

Die Erfindung wird durch die oben beschriebenen Ausführungsbeispiele nicht eingeschränkt. Sie ist im Rahmen der beigefügten Ansprüche modifizierbar.

So ist es denkbar, dass in einer weiteren, nicht dargestellten aber leicht vorstellbaren, Variante der Spreizeinrichtung 8 nach Figur 30, 31, 32 oder Figur 34, 37 die Federenden 300 mit den Andruckschenkeln 32 über den Vorsprüngen 49 über den Belaghaltefedern 7 montiert sind. Mit anderen Worten, die Vorsprünge 49 erstrecken sich durch die entsprechend den Vorsprüngen 49 angepassten Führungsöffnungen 32c der jeweiligen Andruckschenkel 32 der Federarme 20, wobei die Federarme 20 in entsprechender Weise dazu geformt sind.

### BEZUGSZEICHENLISTE

- 1: Bremssattel
- 1a: Zuspannabschnitt
- 1b: Sattelrücken
- 1c: Zugstrebe
- 1d: Befestigungsabschnitt
- 1e: Bodenblech
- 2: Bremsscheibe
- 2a: Bremsscheibendrehachse
- 3: Bremsbelag
- 4: Belagträgerplatte
- 4a: Aufnahmeloch
- 4b: Belagseite
- 4c: Auflagefläche
- 4d, 4e: Seitenfläche
- 4f: Druckseite
- 5: Reibbelag
- 6: Bremsträger
- 7: Belaghaltefeder
- 7a: Klammerelement
- 8: Spreizeinrichtung
- 9: Bandfeder
- 10: Schlitz
- 11: Lasche
- 11a: Druckabschnitt
- 12: Bügel
- 13: Sicherung
- 14: Federbügel
- 14a: Befestigungsende
- 15: Aufhängung
- 15a, 15b: Längsseite
- 15c: Befestigungsloch
- 16: Scherenglied
- 17: Blattfeder
- 18: Federschenkel
- 19: Anlage
- 20: Federarm
- 20a: Befestigungsabschnitt
- 20b: Verbindungsabschnitt
- 21: Haltebogen
- 22: Anlageschenkel
- 22a: Befestigungsende
- 23: Dom
- 24: Anlagebügel
- 25: Bremsträgerhorn
- 25a: Bohrung
- 26: Mittelschenkel
- 26a: Zentralabschnitt
- 26b: Verbreiterung
- 26c: Sicherungselement
- 26d: Nut
- 27: Endschenkel
- 27a: Befestigungsabschnitt
- 28: Belaghaltebügel
- 29: Lasche
- 30: Zapfen
- 31: Stützschenkel
- 31a: Auflageabschnitt
- 32: Andruckschenkel
- 32a: Anlageabschnitt
- 32b: Auflageabschnitt
- 32c: Führungsöffnung
- 32d: Anlageabschnitt
- 33: Mutter
- 34: Stützlasche
- 35: Stift
- 36: Stützfläche
- 37: Anschlusssteg
- 38: Federsteg
- 39: Winkellasche
- 39a: Stützschenkel
- 39b: Andruckschenkel
- 40: Rückhalteblech
- 41: Öffnung
- 42: Basisabschnitt
- 43: Verbindungsabschnitt
- 44: Stützabschnitt
- 45: Anlagefläche
- 46: Auflagefläche
- 47: Stift
- 48: Langloch
- 49: Vorsprung
- 50: Kontur
- 51: Zapfen
- 51a: Gießradien
- 52, 53, 54: Vorsprung
- 55: Führungsvorsprung
- 55a: Führungsfläche
- 56, 56a: Halteabschnitt
- 57: Rückstellelement
- 58: Zentralabschnitt
- 59: Federarm
- 60: Befestigungsabschnitt
- 61: Lasche
- 62: Rückstellelement
- 63: Federkörper
- 64, 65: Federende
- 66,67: Rückstellelement
- 66a, 67a: Federende
- 100: Scheibenbremse
- 150: Verbindung
- 151, 152: Lager
- 200: Verbindungsabschnitt
- 201: Ausnehmung
- 202: Haubenverbinder
- 202a: Längsverbinder
- 203: Abstand
- 220: Verbindungsbogen
- 300: Federende
- 301: Schlitz
- 302: Bewegungsrichtung
- 303: Anlagefläche
- 304: Vorsprung
- 305: Auflagefläche
- 306: Winkel

## Patentansprüche

1. Scheibenbremse (100) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (41) über der Bremsscheibe (2) aufweist, zwei im Bremssattel (1) angeordneten, gegensinnig bewegbaren, jeweils eine Belagträgerplatte (4) und einen darauf befestigten Reibbelag (5) aufweisenden Bremsbelägen (3), von denen ein aktionsseitiger bzw. zuspannseitiger Bremsbelag (3) mittels einer Zuspanneinrichtung über mindestens einen Bremsstempel gegen die Bremsscheibe (2) pressbar ist, sowie mindestens einer Rückstelleinrichtung, mit der der Bremssattel (1) nach einem bremsbedingten Verschieben und Lösen der Bremse rückführbar ist, wobei die Rückstelleinrichtung eine an den sich gegenüberliegenden Bremsbelägen (3) angreifende, entgegen der jeweiligen Zuspannrichtung gleich wirkende Spreizeinrichtung (8) mit an der jeweiligen Belagträgerplatte (4) angreifenden federnden Spreizelementen aufweist, wobei die Spreizeinrichtung (8) in der zentralen Öffnung (41) angeordnet ist, wobei die Spreizelemente direkt oder indirekt außerhalb der Reibbeläge (5) einseitig im Mittenbereich oder an mindestens zwei zur Mitte abständig zueinander angeordneten Anlagebereichen der Bremsbeläge (3) angreifen, wobei die Spreizeinrichtung (8) als die federnden Spreizelemente Federarme (20) aufweist, **dadurch gekennzeichnet, dass**
die Federarme (20) mit einem Haltebogen (21) verbunden sind, der am Bremsträger (6) angebracht ist, wobei der Haltebogen (21) mit zwei einen Belagschacht begrenzenden Bremsträgerhörnern (25) verbunden ist, wobei der Haltebogen (21) C-förmig geformt ist mit zwei sich gegenüberliegenden Endschenkeln (27) sowie einem Mittelschenkel (26), wobei die Anlagebereiche jeweils eine Anlagefläche (45, 303) und eine Auflagefläche (4c, 46, 305) aufweisen, an welchen die Spreizelemente bewegbar angeordnet sind.

2. Scheibenbremse (100) nach Anspruch 1, **dadurch gekennzeichnet, dass**
sich die Spreizelemente ausgehend von einem zentralen Bereich in der Mitte der Öffnung (41) von innen nach außen zu den zur Mitte abständig zueinander angeordneten Anlagebereichen erstrecken.

3. Scheibenbremse (100) nach Anspruch 2, **dadurch gekennzeichnet, dass**
sich die Spreizelemente ausgehend von einem zentralen Bereich in der Mitte der Öffnung (41) von innen nach außen zu den gleichmäßig zur Mitte abständig zueinander angeordneten Anlagebereichen erstrecken.

4. Scheibenbremse (100) nach Anspruch 3 oder 4, **dadurch gekennzeichnet, dass**
der sich der zentrale Bereich der Öffnung (41) beiderseits einer virtuellen Mitte der Öffnung (41) in etwa parallel zu der Ebene der Bremsscheibe (2) in einer Länge in einem Bereich von 30 bis 50 % einer Längsachse der Öffnung (41) erstreckt.

5. Scheibenbremse nach einem der vorhergehenden Ansprüche,
**dadurch gekennzeichnet, dass**
von den Federarmen (20) jeweils zwei an einer zugeordneten Belagträgerplatte (4) anliegen, wobei die Federarme (20) in dem zentralen Bereich der Öffnung (41) miteinander verbunden sind.

6. Scheibenbremse nach einem der vorhergehenden Ansprüche 1 bis 4, **dadurch gekennzeichnet, dass** die Federarme (20) paarweise in Querrichtung der Öffnung (41) angeordnet sind und dass die Federarme 20 einschließlich ihrer Verbindungsabschnitte (200) drahtförmig ausgebildet sind.

7. Scheibenbremse (100) nach Anspruch 6, **dadurch gekennzeichnet, dass** die Enden der Federarme (20) jeweils als ein nach unten gebogener Befestigungsabschnitt (20a) ausgebildet sind.

8. Scheibenbremse (100) nach Anspruch 7, **dadurch gekennzeichnet, dass** jeder Befestigungsabschnitt (20a) in einem Aufnahmeloch (4a) an einem jeden Endbereich einer Belagträgerplatte (4) von der Oberseite her aufgenommen ist.

9. Scheibenbremse nach einem der vorstehenden Ansprüche, **dadurch gekennzeichnet, dass**
die Endschenkel (27) jeweils eine Lasche (29) aufweisen, in die Zapfen (30) der Bremsträgerhörner (25) eingesteckt sind.

10. Scheibenbremse nach einem der Ansprüche 1 bis 9, **dadurch gekennzeichnet, dass**
sich die Federarme (20) und/oder der Haltebogen (21) in radialer Richtung am Bremsträger (6) abstützen.

11. Scheibenbremse nach einem der Ansprüche 1 bis 10, **dadurch gekennzeichnet, dass**
jeder Federarm (20) endseitig mit einem gabelförmigen Federende (300) ausgebildet ist, unter Bildung eines Stützschenkels (31) sowie eines Andruckschenkels (32), wobei der Stützschenkel (31) auf einer Auflagefläche (305) einer Schmalseite der Belagträgerplatte (4) bewegbar aufliegt und der Andruckschenkel (32) mit Druck an einer Anlagefläche (303) der dem Reibbelag (5) zugewandten Seite der Belagträgerplatte (4) bewegbar anliegt.

12. Scheibenbremse nach Anspruch 11, **dadurch gekennzeichnet, dass**
die Auflagefläche (305) in einem Winkel (306) zu einer Horizontalen angeordnet ist, wobei der Winkel (306) in einem Bereich von 3 bis 15° liegt.

13. Scheibenbremse nach Anspruch 11 oder 12, **dadurch gekennzeichnet, dass**
die Anlagefläche (305) von der Belagträgerplatte (4) hervorsteht oder in die Belagträgerplatte (4) eingeformt ist.

14. Scheibenbremse nach einem der Ansprüche 11 bis 13, **dadurch gekennzeichnet, dass**
ein Vorsprung (304) auf der Anlagefläche (303) vorgesehen ist, wobei der Vorsprung (304) von der Anlagefläche (303) in einen Schlitz (301) zwischen dem Stützschenkel (31) und dem Andruckschenkel (32) hervorsteht.

15. Scheibenbremse nach einem der Ansprüche 5 bis 10, **dadurch gekennzeichnet, dass**
jeder Federarm (20) endseitig mit einem Federende (300) mit einem Andruckschenkel (32) ausgebildet ist, wobei der Andruckschenkel (32) mit einem Stützabschnitt (44) der dem Reibbelag (5) zugewandten Seite der Belagträgerplatte (4) in Kontakt steht, wobei der Andruckschenkel (32) mit einem Anlageabschnitt (32a) mit Druck an einer Anlagefläche (45) des Stützabschnitts (44) der Belagträgerplatte (4) bewegbar anliegt und gleichzeitig mit einem Auflageabschnitt (32b) auf einer Auflagefläche (46) des Stützabschnitts (44) der Belagträgerplatte (4) bewegbar aufliegt.

16. Scheibenbremse nach Anspruch 15, **dadurch gekennzeichnet, dass**
ein Andruckschenkel (39a) und ein rechtwinklig dazu liegender Stützschenkel (39b) in Form einer Winkellasche (39) ausgebildet sind.

17. Scheibenbremse nach Anspruch 15 oder 16, **dadurch gekennzeichnet, dass**
der Stützabschnitt (44) mit der Anlagefläche (45) und der Auflagefläche (46) in die Belagträgerplatte (4) eingeformt ist.

18. Scheibenbremse nach einem der Ansprüche 5 bis 17, **dadurch gekennzeichnet, dass**
der Federarm (20) im Anlagebereich an der Belagträgerplatte (4) auf der der Anlagefläche zugewandten Seite konvex geformt ist.

19. Scheibenbremse nach einem der Ansprüche 5 bis 18, **dadurch gekennzeichnet, dass**
zumindest die einem Bremsbelag (3) zugeordneten Federarme (20) endseitig einen an der Belagträgerplatte (4) anliegenden Federsteg (38) und einen Anschlusssteg (37) aufweisen, der mit dem Bremsträger (6), vorzugsweise dem Bremsträgerhorn (25) verbunden ist.

20. Scheibenbremse nach einem der Ansprüche 5 bis 10, **dadurch gekennzeichnet, dass**
jeder Federarm (20) endseitig mit einem Federende (300) mit einem Befestigungsabschnitt (20a) ausgebildet ist, welcher in seiner Längsrichtung mit einem Langloch (48) ausgebildet ist, das ein Führungsabschnitt für das Federende (300) der Spreizeinrichtung (8) ist.

21. Scheibenbremse nach Anspruch 20, **dadurch gekennzeichnet, dass**
jeder Befestigungsabschnitt (20a) jeweils auf einer Auflagefläche (4c) einer jeweiligen Belagträgerplatte (4) aufliegt, wobei die Langlöcher (48) eines jeden Befestigungsabschnitts (20a) jeweils mit einer Anlagefläche der Belagrückenplatte (4) in Zusammenwirkung stehen.

22. Scheibenbremse nach Anspruch 21, **dadurch gekennzeichnet, dass** ein mit der Belagträgerplatte (4) fest verbundener Stift (47) die mit dem jeweiligen Langloch (48) in Zusammenwirkung stehende Anlagefläche der Belagträgerplatte (4) aufweist, wobei die Auflageflächen (4c) jeweils tangential zu der Bremsscheibe (2) verlaufen und einer Ebene liegen.

23. Scheibenbremse nach Anspruch 21, **dadurch gekennzeichnet, dass**
die Langlöcher (48) eine Führungsöffnung (32c) bilden, welche mit einer Kontur (50) der Belagträgerplatte (4) in Zusammenwirkung steht, wobei die Kontur (50) als ein Zapfen (51) oder ein Vorsprung (52, 53, 54) ausgebildet ist.

24. Scheibenbremse nach Anspruch 23, **dadurch gekennzeichnet, dass**
die Kontur (50) von der Belagträgerplatte (4) in axialer Richtung, in radialer Richtung oder/und in tangentialer Richtung in Bezug auf die Bremsscheibe (2) hervorsteht.

25. Scheibenbremse nach Anspruch 23 oder 24, **dadurch gekennzeichnet, dass**
die Kontur (50) ein Vorsprung (49) ist, der eine Halterung für eine Belaghaltefeder (7) bildet.

## Claims

1. A disc brake (100) for a utility vehicle having a brake calliper (1), which straddles a brake disc (2), takes the form of a sliding calliper, is fastened to a positionally static brake carrier (6) and has a central opening (41) over the brake disc (2); two brake pads (3), which are arranged in the brake calliper (1), are able to move in opposite directions and each have a pad-carrier plate (4) to which is fastened a friction pad (5), it being possible to press an action- or application-side brake pad (3) against the brake disc (2) by means of an application device via at least one brake plunger; and at least one resetting device by means of which the brake calliper (1) can be reset following the displacement and release of the brake due to braking, this resetting device having a spreading device (8) that engages with the opposing brake pads (3), acts in the same manner against the corresponding direction of application and has resilient spreading elements that engage with the corresponding pad-carrier plate (4), the spreading device (8) being arranged in the central opening (41), the spreading elements engaging directly or indirectly outside the friction pads (5) unilaterally in the central region on in at least two contact regions of the brake pads (3) that are arranged spaced apart from one another in relation to the centre, the spreading device (8) having spring arms (20) as the resilient spreading elements,
**characterised in that**
the spring arms (20) are connected to a retaining tie (21) that is mounted on the brake carrier (6), this retaining tie (21) being connected to two brake carrier horns (25) that delimit a pad slot, the retaining tie (21) being C-shaped with two opposing end legs (27) and a central leg (26), the contact regions each having a contact surface (45, 303) and a bearing surface (4c, 46, 305) on which the spreading elements are arranged such that they are able to move.

2. A disc brake (100) according to claim 1,
**characterised in that**
the spreading elements extend from a central region in the centre of the opening (41) from the inside to the outside to the contact regions that are arranged spaced apart from one another in relation to the centre.

3. A disc brake (100) according to claim 2,
**characterised in that**
the spreading elements extend from a central region in the centre of the opening (41) from the inside to the outside to the contact regions that are arranged spaced apart from one another uniformly in relation to the centre.

4. A disc brake (100) according to claim 3 or 4,
**characterised in that**
the central region of the opening (41) extends on either side of a virtual centre of the opening (41) approximately parallel to the plane of the brake disc (2) over a length within a range of 30 to 50% of a longitudinal axis of the opening (41).

5. A disc brake (100) according to any one of the preceding claims,
**characterised in that**
each two spring arms (30) lie against an associated pad-carrier plate (4), these spring arms (20) being connected to one another in the central region of the opening (41).

6. A disc brake (100) according to according to any one of the preceding claims 1 to 4,
**characterised in that**
the spring arms (20) are arranged in pairs in the transverse direction of the opening (41) and that the spring arms (20) including their connecting sections (200) are wire-like in form.

7. A disc brake (100) according to claim 6,
**characterised in that**
the ends of the spring arms (20) each take the form of a downward curved fastening sections 20a)

8. A disc brake (100) according to claim 7,
**characterised in that**
each fastening section (20a) is received from the top in a receiving hole (4a) at each end region of a pad-carrier plate (4).

9. A disc brake (100) according to any one of the preceding claims,
**characterised in that**
the end legs (27) each have a lug (29) into which are inserted pins (30) on the brake carrier horns (25).

10. A disc brake (100) according to any one of claims 1 to 9,
**characterised in that**
the spring arms (20) and/or the retaining tie (21) is supported in a radial direction on the brake carrier (6).

11. A disc brake (100) according to any one of claims 1 to 10, **characterised in that**
the end of each spring arm (20) takes the form of a fork-shaped spring end (300) having a supporting part (31) and a pressure part (32), the supporting part (31) lying such that it is able to move on a bearing surface (305) of a narrow side of the pad-carrier plate (4) and the pressure part (32) lying such that it is able to move and exerting pressure on a contact surface (303) of the side of the pad-carrier plate (4) facing the friction pad (5).

12. A disc brake (100) according to claim 11,
**characterised in that**
the bearing surface (305) is arranged at an angle (306) to a horizontal, this angle (306) lying within a range of 3 to 15°.

13. A disc brake (100) according to claim 11 or 12,
**characterised in that**
the contact surface (305) projects from the pad-carrier plate (4) or is moulded into the pad-carrier plate (4).

14. A disc brake (100) according to any one of claims 11 to 13,
**characterised in that**
a projection (304) is provided on the contact surface (303), this projection (304) protruding from the contact surface (303) into a slot (301) between the supporting part (31) and the pressure part (32).

15. A disc brake (100) according to any one of claims 5 to 10,
**characterised in that**
the end of each spring arm (20) takes the form of a spring end (300) having a pressure part (32), this pressure part (32) being in contact with a supporting section (44) of the side of the pad-carrier plate (4) facing the friction pad (5), a contact section (32a) of the pressure part (32) lying such that it is able to move and exerting pressure on a contact surface (45) of the supporting section (44) of the pad-carrier plate (4) and a bearing section (32b) of this same pressure part (32) simultaneously lying such that it is able to move on a bearing surface (46) of the supporting section (44) of the pad-carrier plate (4).

16. A disc brake (100) according to claim 15,
**characterised in that**
a pressure part (39a) and a supporting part (39b) at right angles to it take the form of an angled lug (39).

17. A disc brake (100) according to claim 15 or 16,
**characterised in that**
the supporting section (44) having the contact surface (45) and the bearing surface (46) is moulded into the pad-carrier plate (4).

18. A disc brake (100) according to any one of claims 5 to 17,
**characterised in that**
in the region in which it comes into contact with the pad-carrier plate (4), the side of the spring arm (20) facing the contact surface region is convex in shape.

19. A disc brake (100) according to any one of claims 5 to 18,
**characterised in that**
at least the spring arms (20) associated with a brake pad (3) have at their ends a spring web (38) that abuts the pad-carrier plate (4) and a connecting web (37) that is connected to the brake carrier (6), preferably to the brake-carrier horn (25).

20. A disc brake (100) according to any one of claims 5 to 10,
**characterised in that**
the end of each spring arm (20) takes the form of a spring end (300) having a fastening section (20a) in which is formed a longitudinally arranged elongated hole (48) that acts as a guide section for the spring end (300) of the spreading device (8).

21. A disc brake (100) according to claim 20,
**characterised in that**
each fastening section (20a) lies on a bearing surface (4c) of a pad-carrier plate (4), the elongated holes (48) in each fastening section (20a) cooperating with a contact surface on of pad-carrier plate (4).

22. A disc brake (100) according to claim 21,
**characterised in that**
a pin (47) that is permanently connected to the pad-carrier plate (4) features the contact surface of the pad-carrier plate (4) that cooperates with the corresponding elongated hole (48), the bearing surfaces (4c) each running tangentially in relation to the brake disc (2) and lying in the same plane.

23. A disc (100) brake according to claim 21,
**characterised in that**
the elongated holes (48) form a guide opening (32c) that cooperates with a contour (50) on the pad-carrier plate (4), the contour (50) taking the form of a pin (51) or a projection (52, 53, 54).

24. A disc brake (100) according to claim 23,
**characterised in that**
the contour (50) projects from the pad-carrier plate (4) in an axial direction, in a radial direction and/or in a tangential direction in relation to the brake disc (2).

25. A disc brake (100) according to claim 23 or 24,
**characterised in that**
the contour (50) is a projection (49) that forms a retainer for a pad-retaining spring (7).

## Revendications

1. Frein (100) à disque d'un véhicule utilitaire, comprenant un étrier (1) de frein constitué en étrier coulissant, qui chevauche un disque (2) de frein, qui est fixé à un support (6) de frein fixe et qui a une ouverture (41) centrale au dessus du disque (2) de frein, deux garnitures (3) de frein montées dans l'étrier (1) de frein, mobiles en sens contraire, ayant chacune un flasque (4) de support de garniture et une garniture (5) de friction, qui y est fixée, dont une garniture de frein, du côté de l'action ou du côté du serrage, peut, au moyen d'un dispositif de serrage, par l'intermédiaire d'au moins un piston de frein, être pressée sur le disque (2) de frein, ainsi qu'au moins un dispositif de rappel, par lequel l'étrier (1) de frein peut, après un déplacement provoqué par un freinage et desserrage du frein, être rappelé, le dispositif de rappel ayant un dispositif (8) d'écartement attaquant les garnitures (3) de frein opposées, agissant pareillement à l'encontre du sens de serrage respectif et ayant des éléments d'écartement à ressort attaquant le flasque (4) de support de garniture respectif, le dispositif (8) d'écartement étant disposé dans l'ouverture (41) centrale, les éléments d'écartement attaquant, directement ou indirectement, à l'extérieur des garnitures (5) de friction, d'un côté dans la partie médiane ou au moins deux parties d'application, disposées l'une par rapport à l'autre à distance du milieu, des garnitures (3) de frein, le dispositif (8) d'écartement ayant des bras (20) de ressort comme éléments d'écartement à ressort,
**caractérisé en ce que**
les bras (20) de ressort sont reliés à un arceau (21) de maintien, qui est monté sur le support (6) de frein, l'arceau (21) de maintien étant relié à deux cornes (25) de support de frein, délimitant un puits de garniture, l'arceau (21) de maintien étant en forme de C, en ayant deux branches (27) d'extrémité opposées, ainsi qu'une branche (26) médiane, les parties d'application ayant chacune une surface (45, 303) d'application et une surface (4c, 46, 305) de support, sur lesquelles les élément d'écartement sont montés mobiles.

2. Frein (100) à disque suivant la revendication 1,
**caractérisé en ce que**
les éléments d'écartement s'étendent à partir d'une partie centrale au milieu de l'ouverture (41), de l'intérieur vers l'extérieur, vers les parties d'application disposées l'une par rapport à l'autre à distance du milieu.

3. Frein (100) à disque suivant la revendication 2,
**caractérisé en ce que**
les éléments d'écartement s'étendent à partir d'une partie centrale au milieu de l'ouverture (41), de l'intérieur vers l'extérieur, aux parties d'application disposées l'une par rapport à l'autre à même distance du milieu.

4. Frein (100) à disque suivant la revendication 3 ou 4,
**caractérisé en ce que**
la partie centrale de l'ouverture (41) s'étend des deux côtés d'un milieu virtuel de l'ouverture (41), à peu près parallèlement au plan du disque (2) de frein, sur une longueur dans une plage de 30 à 50% d'un axe longitudinal de l'ouverture (41).

5. Frein à disque suivant l'une des revendications précédentes,
**caractérisé en ce que**,
parmi les bras (20) de ressort, respectivement, deux s'appliquent à un flasque (4) de support de garniture associé, les bras (20) de ressort étant reliés entre eux dans la partie centrale de l'ouverture (41).

6. Frein à disque suivant l'une des revendications 1 à 4 précédentes,
**caractérisé en ce que**
les bras (20) de ressort sont disposés par paire dans la direction transversale de l'ouverture (41) et **en ce que** les bras (20) de ressort, y compris leurs tronçons (200) de liaison, sont constitués sous la forme de fil métallique.

7. Frein (100) à disque suivant la revendication 6,
**caractérisé en ce que**
les extrémités des bras (20) de ressort sont constituées chacune sous la forme d'un tronçon (20a) de fixation coudé vers le bas.

8. Frein (100) à disque suivant la revendication 7,
**caractérisé en ce que**
chaque tronçon (20a) de fixation est reçu, à partir du côté supérieur dans un trou (4a) de réception à une partie d'extrémité d'un flasque (4) de support de garniture.

9. Frein à disque suivant l'une des revendications précédentes,
**caractérisé en ce que**
les branches (27) d'extrémité ont chacune une attache (29), dans laquelle sont enfichés des tenons (30) des cornes (25) du support de frein.

10. Frein à disque suivant l'une des revendications 1 à 9, **caractérisé en ce que**
les bras (20) de ressort et/ou l'arceau (21) de maintien s'appuie dans la direction radiale sur le support (6) de frein.

11. Frein à disque suivant l'une des revendications 1 à 10,
**caractérisé en ce que**
chaque bras (20) de ressort est constitué du côté de l'extrémité, en ayant une extrémité (300) de ressort en forme de fourche, avec formation d'une branche (31) d'appui, ainsi que d'une branche (32) de poussée, la branche (31) d'appui s'appliquant de manière mobile à une surface (305) de support d'un petit côté du flasque (4) de support de garniture et la branche (32) de poussée s'appliquant de manière mobile avec pression à une surface (303) d'application de la face, tournée vers la garniture (5) de friction, du flasque (4) de support de garniture.

12. Frein à disque suivant la revendication 11,
**caractérisé en ce que**
la surface (305) de support fait un angle (306) avec une horizontale, l'angle (306) étant dans la plage de 3 à 15°.

13. Frein à disque suivant la revendication 11 ou 12,
**caractérisé en ce que**
la surface (305) d'application est en saillie du flasque (4) de support de garniture ou est incorporée au flasque (4) de support de garniture.

14. Frein à disque suivant l'une des revendications 11 à 13,
**caractérisé en ce qu'**
une saillie (304) est prévue sur la surface (303) d'application, la saillie (304) faisant saillie de la surface (303) d'application dans une fente (301) entre la branche (31) d'appui et la branche (32) de poussée.

15. Frein à disque suivant l'une des revendications 5 à 10,
**caractérisé en ce que**
chaque bras de ressort est constitué du côté de l'extrémité en ayant une extrémité (300) de ressort ayant une branche (32) de poussée, la branche (32) de poussée étant en contact avec une partie (44) d'appui de la face, tournée vers la garniture (5) de friction, du flasque (4) de support de garniture, la branche (32) de poussé s'appliquant de manière mobile, par une partie (32a) d'application avec poussée, à une surface (45) d'application de la partie (44) d'appui du flasque (4) de support de garniture et s'appliquant de manière mobile en même temps par une partie (32b) de support à une surface (46) de support de la partie (44) d'appui du flasque (4) de support de garniture.

16. Frein à disque suivant la revendication 15,
**caractérisé en ce qu'**
une branche (39a) de poussée et une branche (39b) d'appui sous la forme d'une attache (39) en équerre.

17. Frein à disque suivant la revendication 15 ou 16,
**caractérisé en ce que**
la partie (44) d'appui est incorporée avec la surface (45) d'application et la surface (46) de support au flasque (4) de support de garniture.

18. Frein à disque suivant l'une des revendications 5 à 17,
**caractérisé en ce que**
le bras (20) de ressort est, dans la partie d'application au flasque (4) de support de garniture, convexe du côté tourné vers la surface d'application.

19. Frein à disque suivant l'une des revendications 5 à 18,
**caractérisé en ce qu'**
au moins les bras (20) de ressort associés à une garniture (3) de frein ont, du côté de l'extrémité, une entretoise (38) de ressort s'appliquant au flasque (4) de support de garniture et une entretoise (37) de raccordement, qui est reliée au support (6) de frein, de préférence à la corne (25) du support de frein.

20. Frein à disque suivant l'une des revendications 5 à 10,
**caractérisé en ce que**
chaque bras (20) de ressort est constitué du côté de l'extrémité en ayant une extrémité (300) de ressort, ayant une partie (20a) de fixation, qui est constituée, en ayant dans sa direction longitudinale une boutonnière (48), qui est une partie de guidage de l'extrémité (300) de ressort du dispositif (8) d'écartement.

21. Frein à disque suivant la revendication 20,
**caractérisé en ce que**
chaque partie (20a) de fixation s'applique, respectivement, à une surface (4c) de support d'un flasque (4) de support de garniture respectif, les boutonnières (48) de chaque partie (20a) de fixation étant, respectivement, en coopération avec une surface d'application du flasque (4) de support de garniture.

22. Frein à disque suivant la revendication 21,
**caractérisé en ce qu'**
une broche (47), reliée fixement au flasque (4) de support de garniture, a la surface d'application, en coopération avec la boutonnière (48) respective, du flasque (4) de support de garniture, les surfaces (4c) de support s'étendant chacune tangentiellement au disque (2) de frein et se trouvant dans un plan.

23. Frein à disque suivant la revendication 21,
**caractérisé en ce que**
les boutonnières (48) forment une ouverture (32c) de guidage, qui coopère avec un contour (50) au flasque (4) de support de garniture, le contour (50) étant constitué sous la forme d'un tenon (51) ou d'une saillie (52, 53, 54).

24. Frein à disque suivant la revendication 23,
**caractérisé en ce que**
le contour (50) est en saillie du flasque (4) de support de garniture dans la direction axiale, dans la direction radiale, ou/et dans une direction tangentielle rapportée au disque (2) de frein.

25. Frein à disque suivant la revendication 23 ou 24,
**caractérisé en ce que**
le contour (50) est une saillie (49), qui forme une fixation pour un ressort de maintien de garniture.
